(12) **EUROPÄISCHE PATENTSCHRIFT**

(45) Veröffentlichungstag und Bekanntmachung des Hinweises auf die Patenterteilung:
**23.08.2000 Patentblatt 2000/34**

(51) Int Cl.$^7$: **H04B 1/713**, H04B 3/54

(21) Anmeldenummer: **95110263.1**

(22) Anmeldetag: **01.07.1995**

(54) **Verfahren und Einrichtung zur digitalen Signalsynthese und -verarbeitung für frequenzagile Bandspreizsysteme**

Method and apparatus for digital signal synthesis and processing for frequency hopping spread spectrum systems

Procédé et dispositif de synthèse et de traitement de signal numérique pour systèmes d'étalement de spectre à évasion de fréquence

(84) Benannte Vertragsstaaten:
**AT BE CH DE FR LI NL SE**

(30) Priorität: **07.07.1994 DE 4423978**

(43) Veröffentlichungstag der Anmeldung:
**10.01.1996 Patentblatt 1996/02**

(73) Patentinhaber: **ABB PATENT GmbH 68309 Mannheim (DE)**

(72) Erfinder: **Dostert, Klaus D-67706 Krickenbach (DE)**

(74) Vertreter: **Rupprecht, Klaus, Dipl.-Ing. et al c/o ABB Patent GmbH, Postfach 10 03 51 68128 Mannheim (DE)**

(56) Entgegenhaltungen:
**EP-A- 0 507 087**

- **LAM Y M ET AL: "Frequency-hopped spread-spectrum transmission with band-efficient modulations and simplified noncoherent sequence estimation" IEEE TRANSACTIONS ON COMMUNICATIONS, DEC. 1990, USA, Bd. 38, Nr. 12, ISSN 0090-6778, Seiten 2184-2196, XP000203350**
- **DOSTERT K ET AL: "STOERSICHERE VIERKANAL-DATENUEBERTRAGUNG AUF STROMVERSORGUNGSLEITUNGEN" NACHRICHTENTECHNIK ELEKTRONIK, Bd. 40, Nr. 11, 1.Januar 1990, BERLIN (DE), Seiten 412-418, XP000178589**
- **CAI K V ET AL: "Continuously available net entry synchronization technique" MILCOM 90. A NEW ERA. 1990 IEEE MILITARY COMMUNICATIONS CONFERENCE. CONFERENCE RECORD (CAT. NO.90CH2831-6), MONTEREY, CA, USA, 30 SEPT.-3 OCT. 1990, 1990, NEW YORK, NY, USA, IEEE, USA, Seiten 202-206 vol.1, XP000221781**

**Beschreibung**

Die Erfindung betrifft ein Verfahren und eine Einrichtung zum gleichzeitigen Senden und Empfangen von digitalen Informationen z.B. über elektrische Energieverteilnetze im Vollduplex-Betrieb unter Einsatz bandspreizender Modulationsverfahren (engl.: Spread Spectrum Techniques). Bei zahlreichen praktischen Versuchen hat sich das Spread-Spectrum-Verfahren Frequenzsprungmodulation (engl.: Frequency Hopping FH) bewährt. Ein wesentliches Kennzeichen dieses Verfahrens ist, daß stets mit konstanter Signalamplitude gearbeitet wird und so eine optimale energetische Nutzung der Kanalressourcen gegeben ist. Zur Beschreibung der Erfindung wird im folgenden eine Einrichtung, die als Modem (Kurzwort für Modulator-Demodulator) bezeichnet wird, als Anwendungsbeispiel angeführt. Ein derartiges Modem dient zur gleichzeitigen oder auch wechselweisen bidirektionalen Übermittlung digitaler Informationen über elektrische Energieverteilnetze, d.h. es ist Vollduplex- oder auch Halbduplex-Betrieb möglich. Die Datenübertragung ist in jedem Fall resistent gegen Störungen auf den Stromversorgungsleitungen und erlaubt trotz der widrigen Übertragungseigenschaften dieser Leitungen eine äußerst zuverlässige schnelle Kommunikation. Des weiteren ist die gleichzeitige Aktivität mehrerer Modems am selben Stromnetz ohne gegenseitige Störbeeinflussung gewährleistet (Vielfachzugriff auf dasselbe Frequenzband).

Das der vorliegenden Erfindung zu Grunde liegende Verfahren wird vorteilhaft in Form eines ASICs in eine Einrichtung umgesetzt, wobei die senderseitige Signalerzeugung und die korrelative empfängerseitige Verarbeitung frequenzagiler Bandspreizsignale bis hin zur Bitentscheidung parallel, d.h. gleichzeitig und mit hoher Präzision in Echtzeit erfolgt. Das realisierte digitale Konzept erlaubt den Einsatz einer praktisch unbegrenzten Vielfalt von Signalformen ohne Hardwareänderungen. Es sind verschiedene Datenraten und Frequenzbereiche in weiten Grenzen frei wählbar. Die im ASIC untergebrachten Funktionen sind auf anderem Wege, selbst durch Verwendung der aufwendigsten digitalen programmierbaren Signalprozessoren, nach dem derzeitigen Stand der Technik nicht realisierbar. Zudem würden - vorausgesetzt, daß sich mit einem programmierbaren Baustein in naher Zukunft die hier zur Debatte stehenden Echtzeitanforderungen erfüllen ließen - die Systemkosten und die Leistungsaufnahme einer solchen Lösung den praktischen Einsatz verhindern.

Es ist Stand der Technik, zur Informationsübertragung über Stromversorgungsnetze Systeme mit schmalbandiger oder auch mit breitbandiger, bandspreizender Modulation einzusetzen - siehe z.B. die Druckschriften DE 40 01 265.4, DE 40 01 266.2 und die europäischen Patente EP 0 200 016 und EP 0 199 148 sowie die Patentanmeldung DE 43 23 376.7 veröffentlicht am 19.01.1995. Der praktische Einsatz von Systemen mit hoher Frequenzagilität ist bislang jedoch nicht erfolgt, obwohl gerade solche Systeme ein Höchstmaß an Störresistenz bieten können. Der Systemaufwand, insbesondere empfängerseitig, war bisher z.B. im Vergleich zu einem FSK-System untragbar hoch. Geeignete, kostengünstig hochintegrierbare Verfahren standen bisher nicht zur Verfügung. Hier soll die vorliegende Erfindung Abhilfe schaffen.

Seit 1. Dezember 1991 ist die europäische Norm EN 50 065-1:1991, die den Status einer deutschen Norm hat, in Kraft. Diese Norm regelt die Nutzung des Frequenzbereichs von 3kHz...148,5kHz für Signalübertragungszwecke an elektrischen Energieverteilnetzen. Das verfügbare Band wird dabei grob in zwei Bereiche eingeteilt: Der Frequenzbereich von 3kHz...95kHz ist den Energieversorgungsunternehmen (EVU) vorbehalten; dort sind relativ hohe Sendepegel bis zu 134dBµV zulässig. Der restliche Frequenzbereich von 95kHz...148,5kHz steht dem privaten Nutzer genehmigungsfrei zur Verfügung, solange der Sendepegel 116dBµV nicht überschreitet. Dieser ziemlich niedrige Sendepegel ( < 1V Signalamplitude) geht einher mit einer gegenüber früheren Bundespost-Vorschriften drastisch eingeengten Bandbreite. Die EN 50 065-1 stellt hohe Anforderungen an Verfahren und Einrichtungen zur störsicheren Übertragung von Informationen über Stromversorgungsleitungen. Wegen der Amplitudenbegrenzung haben Übertragungsverfahren, die stets die volle Amplitude nutzen können, die besten Erfolgsaussichten. Ein solches Verfahren ist z.B. FH, wobei die eingesetzten Signalformen vielfältige Frequenzvariationen erlauben. Entscheidend für eine kostengünstige und zuverlässig reproduzierbare Realisierung ist ein digitales Konzept, das hochintegrierbar ist, und das den jeweiligen Aufgaben ohne Hardwareänderungen angepaßt werden kann. Die vorliegende Erfindung zeigt eine universelle vorteilhafte Lösung auf.

Ausgangspunkt der Betrachtungen ist eine Vollduplex-Übertragung binärer Informationen mit schnellen Frequenzsprüngen, d.h. während der Dauer $T_B$ eines Datenbits wird die Sendefrequenz sprungartig m-mal gewechselt, mit m=1,3,5,7... Je größer m gewählt wird, umso störresistenter erfolgt die Informationsübertragung. Bei fester Datenrate $r_D$=1/$T_B$ ist m durch die verfügbare Bandbreite B einerseits und durch die Grenzen der Präzision bei der Synchronisation andererseits vorgegeben. Auf dem Verteilnetz eines Energieversorgungsunternehmens (EVU) steht für die Informationsübertragung gemäß der europäischen Norm EN 50 065-1 das Frequenzband von 3kHz bis 95kHz, also eine Bandbreite B=92kHz zur Verfügung. Wenn beispielsweise binäre Informationen mit einer Datenrate (Bitrate) $r_D$=480bit/s mittels Frequenzsprungverfahren zu übertragen sind, wobei m=5 Frequenzsprünge während einer Datenbitdauer $T_B$ erfolgen sollen, dann ist die Frequenzsprungrate h=2400s$^{-1}$. Der Kehrwert T=1/h der Frequenzsprungrate gibt die Dauer des Zeitintervalls an, während dessen jeweils eine der m Frequenzen gesendet wird. Die Nachrichtentheorie besagt, daß in einem Frequenzband der Breite B=92kHz bei der Frequenzsprungrate h=2400s$^{-1}$ maximal eine

Anzahl N= $\lceil$ B/H $\rceil$ = $\lceil$ 92000/2400 $\rceil$ =38 Signale mit jeweils um 2400Hz versetzter Frequenz gleichzeitig übertragen werden und ohne gegenseitige Störbeeinflussung von Empfängern, die korrelative Signalverarbeitung durchführen, fehlerfrei detektiert werden können. $\lceil \cdot \rceil$ ist der ganzzahlige Anteil von ($\cdot$). Es ist also möglich, auf einem elektrischen Energieverteilnetz, z.B. zwischen einer Transformatorstation und den angeschlossenen Haushalten - das können einige hundert sein - bis zu 38/2=19 FH-Vollduplex-Modems der beschriebenen Art mit 480bit/s gleichzeitig und ohne gegenseitige Störbeeinflussung zu betreiben. Entscheidende Voraussetzung dafür ist nicht nur eine hochpräzise Signalerzeugung sondern auch das genaue Einfügen aller Sendesignale in ein globales Zeitraster und eine erfindungsgemäß perfekte korrelative Signalverarbeitung im Empfängerteil eines jeden Modems.

Eine dichte Kanalbelegung erfordert eine genaue Sendesignalerzeugung. Dabei ist wichtig, daß alle Signale von einer festen, hochkonstanten Mutterfrequenz abgeleitet werden, und daß beim Frequenzwechsel kein Phasensprung auftritt, sondern ein kontinuierlicher Phasenübergang stattfindet. Die Frequenz hingegen muß sprungartig, d. h. ohne Einschwingvorgang wechseln. Der kontinuierliche Phasenübergang ist auch bei nicht vollständiger Kanalbelegung erforderlich, um die strengen Grenzwerte für die Außerbandstörung nach der Norm EN 50 065-1 mit vertretbarem Filteraufwand erfüllen zu können. Solche Anforderungen sind nur auf digitalem Wege mit dem besonderen im folgenden dargestellten Verfahren hinreichend genau und aufwandsgünstig realisierbar.

Bei der Signalerzeugung und Signalverarbeitung in einem Bandspreizsystem ist grundsätzlich eine Synchronisation erforderlich. Beim korrelativen Empfang ist die Synchronisation des Empfangssignals mit einem lokal im Empfänger vorhandenen Referenzsignal nötig. Im Fall der Frequenzsprungmodulation kommt dieses Referenzsignal aus einem Frequenzsynthesizer. Beim Senden wird ebenfalls ein synchronisierter Frequenzsynthesizer benötigt, dessen informationstragende Ausgangssignale ins Stromnetz eingespeist werden. Das Problem der Synchronisation läßt sich bei Systemen, die an Stromversorgungsleitungen arbeiten, mit Hilfe der Netzwechselspannung einfach und kostengünstig lösen - siehe z.B. die europäischen Patente EP 0 200 016, EP 0 199 148 und die europäische Patentanmeldung EP 507 087.

Die Hardware bisheriger Sende- und Empfangsgeräte zur Informationsübertragung auf elektrischen Verteilnetzen hat den Einsatz von Bandspreiztechniken mit frequenzagilen Signalformen bislang nicht erlaubt. Aufgabe der vorliegenden Erfindung ist deshalb die Schaffung eines neuartigen Verfahrens, das auf eine digitale Einrichtung führt, die alle wesentlichen Teile zur Sendesignalsynthese und zur inkohärenten korrelativen Empfangssignalverarbeitung in einem frequenzagilen Bandspreizsystem bis hin zur Bitentscheidung beinhaltet. Die neue digitale Einrichtung bietet außerdem die Möglichkeit, gleichzeitig zu senden und zu empfangen, also Vollduplexbetrieb durchzuführen. Dabei ist ein Höchstmaß an Flexibilität hinsichtlich der Frequenzwahl (Lage der benutzen Frequenzen im erlaubten Übertragungsband) gegeben.

Aufgabe einer Sendeeinrichtung in einem Modem zur Übertragung digitaler Informationen über Stromversorgungsleitungen ist die präzise und zeitgenaue Erzeugung einer Vielzahl von Signalen mit relativ eng benachbarten Frequenzen. Dabei muß, abhängig von den zu sendenden Informationen, ein rascher phasenkontinuierlicher Frequenzwechsel möglich sein, ohne daß dabei Einschwingvorgänge auftreten. In analoger Technik aufgebaute Sendeeinrichtungen können die genannten Anforderungen nicht oder nur mit unwirtschaftlich hohem Aufwand bewerkstelligen und sind dann völlig unflexibel, wenn es z.B. um Änderungen der Sendefrequenzen geht.

Die Empfangseinrichtung des Modems muß in der Lage sein, Signale mit eng benachbarten Frequenzen unbekannter Phasenlage perfekt zu trennen und so die gesendete Information wiederzugewinnen. Dazu ist in mehreren parallel arbeitenden Zweigen des Empfängers signalangepaßte Filterung auf korrelativem Wege notwendig. Das Prinzip der aktiven Korrelation ist aus Standard-Lehrbüchern hinreichend bekannt. Aus einem aktiven Korrelator, der allgemein aus einer Multiplizier- und einer Integriereinheit besteht, wird ein signalangepaßtes Filter (engl.: matched filter), z.B. für Signalformen der Chipdauer $T_c$, wenn man durch Synchronisation dafür sorgt, daß die Integriereinheit an jedem Chipintervallende auf Null gesetzt wird, nachdem der während der Chipdauer aufintegrierte Wert zur Weiterverarbeitung abgetastet und gegebenenfalls gespeichert wurde. Der Aufwand für eine derartige Empfängerschaltung in Analogtechnik wäre untragbar hoch. Denn jeder Datenbit-Zweig würde einen eigenen phasenunempfindlichen Quadraturempfänger, bestehend aus je zwei Analogmultiplizierern mit nachgeschalteten löschbaren Integratoren und Frequenzsynthesizern, die die "H"- und "L"-Bit-Signalformen jeweils in Sinus- und in Cosinuslage bereitstellen, erfordern. Die Fertigung von Empfängern für frequenzagile Signalformen z.B. mit m=5 Frequenzen pro Datenbit in Analogtechnik wäre mit unüberwindlichen Problemen der Bauteilselektion und aufwendigem Abgleich behaftet, weil 10 separate Korrelatoren gebaut werden müßten. Darüber hinaus wäre keine Flexibilität hinsichtlich Parameter-Änderungen erzielbar. Bei Änderungen der Frequenzen und/oder der Chipdauer $T_c$ wäre ein Umbau der Hardware und generell ein aufwendiger Neuabgleich nicht zu umgehen.

Bisher wurde deshalb die breite Einführung der hochgradig störresistenten frequenzagilen Bandspreiztechnik nicht erreicht, obwohl es an Anwendungsgebieten nicht mangelt. Die vorliegende Erfindung garantiert erstmals die einfache und sichere Reproduzierbarkeit der Modemeigenschaften und mit wachsenden Produktionsstückzahlen stetig sinkende Kosten in industrieller Serienherstellung. Die Erfindung ist somit geeignet, dem breiten Einsatz störresistenter Datenübertragung auf Stromnetzen mittels Bandspreiztechnik besonders in Europa, wo die strengen Einschränkungen der EN 50 065-1 gelten, zum Durchbruch zu verhelfen. Bislang sind auf dem europäischen Markt keine zuverlässig funktionierenden Modems weder mit konventionellen Modulationsverfahren noch mit Bandspreiztechnik für die Datenübertragung auf elektrischen Verteilnetzen erhältlich.

Das besondere Kennzeichen der vorliegenden Erfindung ist, daß sich das neuartige Verfahren hervorragend zur Implementierung auf einer integrierten Digitalschaltung mit relativ niedriger Komplexität eignet, wie z.B. FPGA, CMOS-Gate-Array, Cell-Array. Es kann aber auch eine Vollkundenschaltung bei hinreichend hoher Stückzahl vorteilhaft sein.

Anhand der Zeichnungen Fig. 1 bis Fig. 4 wird eine Ausführungsform der Erfindung beschrieben, wobei Fig. 1 einen Systemüberblick gibt, Fig. 2 das Gesamtkonzept zum Aufbau einer digitalen Einrichtung beinhaltet, Fig. 3 zur näheren Erläuterung einzelner Abläufe dient und Fig. 4. die wichtigsten Zusammenhänge für das Zeitverhalten beschreibt. Aus Gründen der Übersicht und Anschaulichkeit wird die Übertragung binärer Informationen (also ein Strom zufällig aufeinanderfolgender "H"- und "L"-Bits) mit fester Datenrate $r_D = 1/T_B = 480$bit/s unter Einsatz von Frequenzsprungmodulation mit 5 Signalformen der Chipdauer $T_c = T_B/5$ betrachtet. Man hat also ein frequenzagiles Bandspreizsystem mit m=5 vor sich. Der Übergang zu anderen technisch sinnvollen Werten von m, wie z.B. m=1, 3, 7, 9... ist anhand der folgenden Ausführungen für den Fachmann ohne große Mühe nachvollziehbar.

Bei dem an elektrischen Verteilnetzen vorliegenden inkohärenten Empfang sind für m=5 zehn parallel arbeitende Korrelatoren im Empfänger nötig. Mit der Festlegung $T_c = T_B/5$ ergibt sich eine Frequenzsprungrate $h = 2400$s$^{-1}$. Die folgende Tabelle 1 zeigt eine Auswahl von 30 Frequenzen aus dem Bereich 9,6kHz...148,8kHz im Abstand 4800Hz. Es handelt sich - wie leicht nachzurechnen ist - um einen orthogonalen Frequenzsatz, wobei in jede Chipdauer $T_c$ jeweils eine ganze Anzahl von Perioden paßt. Bei 600kHz Abtastrate werden für eine fehlerfreie Darstellung maximal 125 Abtastwerte benötigt. Wegen des inkohärenten Empfangs werden pro Abastwert X 10 Referenzwerte Y benötigt, so daß für die Ausgabe der Referenzsignalabtastwerte die Taktfrequenz fm=6MHz erforderlich ist.

Tabelle 1:

| Beispiel eines orthogonalen Frequenzsatzes mit 30 Frequenzen | | |
|---|---|---|
| Nummer | Frequenz in Hz | Zahl der Werte |
| 0 | 9600 | 125 |
| 1 | 14400 | 125 |
| 2 | 19200 | 125 |
| 3 | 24000 | 25 |
| 4 | 28800 | 125 |
| 5 | 33600 | 125 |
| 6 | 38400 | 125 |
| 7 | 43200 | 125 |
| 8 | 48000 | 125 |
| 9 | 52800 | 125 |
| 10 | 57600 | 125 |
| 11 | 62400 | 125 |
| 12 | 67200 | 125 |
| 13 | 72000 | 25 |
| 14 | 76800 | 125 |
| 15 | 81600 | 125 |
| 16 | 86400 | 125 |
| 17 | 91200 | 125 |
| 18 | 96000 | 25 |
| 19 | 100800 | 125 |
| 20 | 105600 | 125 |
| 21 | 110400 | 125 |
| 22 | 115200 | 125 |
| 23 | 120000 | 5 |
| 24 | 124800 | 125 |
| 25 | 129600 | 125 |
| 26 | 134400 | 125 |

Tabelle 1:  (fortgesetzt)

| Beispiel eines orthogonalen Frequenzsatzes mit 30 Frequenzen | | |
|---|---|---|
| Nummer | Frequenz in Hz | Zahl der Werte |
| 27 | 139200 | 125 |
| 28 | 144000 | 25 |
| 29 | 148800 | 125 |

Bei einem Frequency-Hopping System kann ein Optimum bezüglich Störresistenz oder auch Manipulationssicherheit dann erreicht werden, wenn die Frequenzen, auf die ein Datenbit verteilt wird, möglichst weit auseinander liegen. Es ist dann unwahrscheinlich, daß mehrere Frequenzen gleichzeitig derselben Störbeeinflussung unterliegen. Auf dem Verteilnetz eines Energieversorgungsunternehmens (EVU) steht für die Informationsübertragung gemäß der europäischen Norm EN 50 065-1 das Frequenzband von 3kHz bis 95kHz zur Verfügung. Dort wäre für ein System mit m=5 z.B. die folgende Wahl der Frequenzen sinnvoll:

Tabelle 2:

| Frequenzwahl für ein FH-System mit m=5 | | | | |
|---|---|---|---|---|
| $f_1 \equiv A$ | $f_2 \equiv B$ | $f_3 \equiv C$ | $f_4 \equiv D$ | $f_5 \equiv E$ |
| 43.200Hz | 57.600Hz | 72.000Hz | 81.600Hz | 91.200Hz |

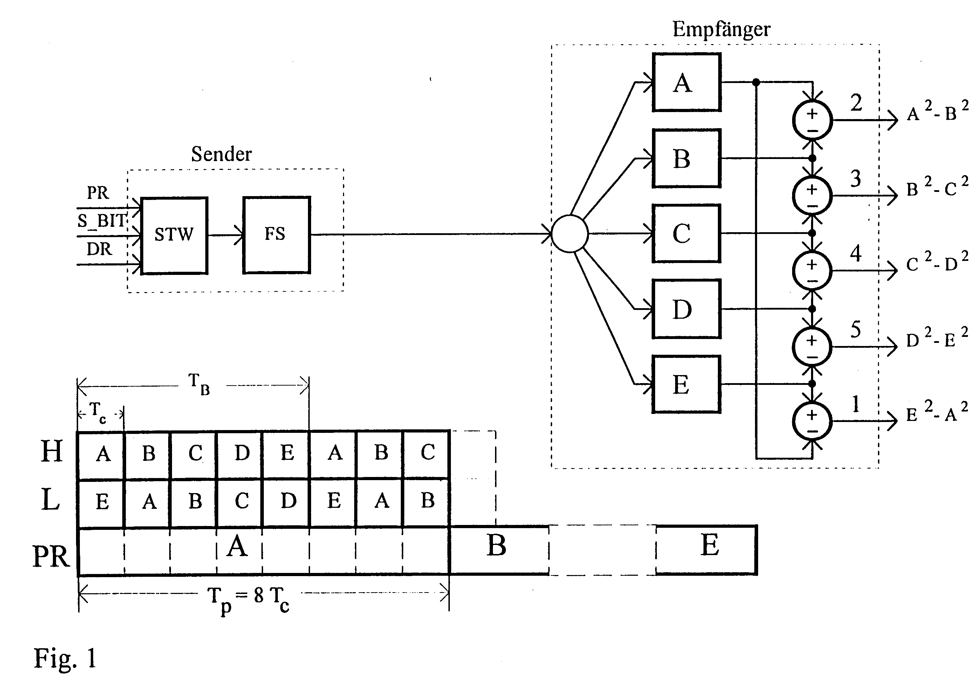

Im linken Teil von Fig. 1 ist ein Frequenzschema für das Übertragen von H- und L-Datenbits sowie für das Aussenden einer Präambel zur Kennzeichnung des Beginns einer Übertragung angegeben, das für die im folgenden beispielhaft beschriebene Ausführungsform der Erfindung zu Grunde gelegt wird. Ein H-Datenbit wird demnach durch eine Frequenzfolge f1...f5, dargestellt, während die Folge für ein L-Datenbit durch zyklisches Vertauschen um einen Schritt $T_c$ entsteht. Zwecks besserer Lesbarkeit sind den Frequenzen f1...f5 die in Tabelle 2 und Fig. 1 eingetragenen Buchstabenfolgen ABCDE fü "H" und EABCD für "L" zugeordnet. Die Präambel weist die gleiche Frequenzfolge wie ein H-Datenbit auf, allerdings mit achtfacher Chipdauer. Eine solche Präambellänge ist sinnvoll, weil eine Präambel nur einmal am Beginn eines relativ langen Datenblocks, der 100bit und mehr enthalten kann, gesendet wird. Für die Präambel kann je nach Anwendung auch die Wahl anderer Frequenzen, die nicht in einem H- oder L-Datenbit vorkommen, sinnvoll sein. Hauptaufgabe der Präambel ist es, im Empfänger zuverlässig den Beginn einer Datenübertragung erkennbar zu machen. Daraus folgt, daß bei Präambelchipdetektion eine höhere Sicherheit zweckmäßig ist als bei der Detektion von Datenbits. Das Problem der sicheren Präambeldetektion ist vielschichtiger als man auf der Grundlage der bisherigen Ausführungen vermutet. Es erweist sich, wie noch gezeigt wird, als vorteilhaft, die Möglichkeit einer Bewertung der Detektionsqualität für jedes einzelne Präambelchip vorzusehen. Für diese Aufgabe ist eine besondere Ausgestaltung der vorliegenden Erfindung erforderlich, die später beschrieben wird.

Oberhalb des Frequenzschemas zeigt Fig. 1 die beiden Funktionsblöcke STW (Steuerwerk) und FS (Frequenzsynthesizer) des Sendeteils eines Modems. Am Beginn einer Datenübertragung wird über die Leitung PR dem Steuerwerk (STW) mitgeteilt, daß eine Präambel zu senden ist; danach wird über eine Leitung S_BIT das zu sendende Datenbit zugeführt. Über ein Leitungsbündel DR ist die Auswahl verschiedener Datenraten möglich, wobei für die Praxis z.B. folgende fünf Kombinationen sinnvoll sind: 960, 480, 240, 120 und 60bit/s. Für die weitere Beschreibung wird das bereits oben eingeführte Beispiel mit $r_D$=480bit/s beibehalten. Die Verhältnisse bei den übrigen Datenraten sind mit einfachen Überlegungen daraus abzuleiten.

Die Empfängerseite eines frequenzagilen Datenübertragungssystems ist weitaus komplexer als z.B. bei einem einfachen FSK-System. Die rechte Seite von Fig. 1 zeigt den grundsätzlichen Aufbau. Es sind fünf parallel arbeitende Matched Filter erforderlich, die jeweils für eine der Signalformen mit den Frequenzen A...E entsprechend f1...f5 vorgesehen sind. Bei der Datenbitdetektion ist die Ermittlung der in Fig. 1 rechts eingetragenen Differenzen $A^2$-$B^2$... $E^2$-$A^2$ von Bedeutung. Bei negativer Differenz wird das gerade empfangene Chip einem H-Bit zugeordnet, sonst einem L-Bit. Nach Ablauf von fünf Chipintervallen $T_c$ wird auf dasjenige Datenbit entschieden, für das mindestens drei Chipentscheidungen getroffen wurden. Bei der Datenbitdetektion ist in jedem Chipintervall stets nur eine der fünf Differenzen von Bedeutung, und nur diese muß abgefragt werden. Wenn die Zahlendarstellung im Zweierkomplement erfolgt, genügt dafür das Lesen des höchstwertigen Bits. Die korrekte Synchronisation muß am Beginn der Datenübertragung mittels Präambel sichergestellt werden. Von entscheidender Bedeutung ist demnach die zuverlässige Unterscheidung des Beginns einer Datenübertragung vom an Stromnetzen stets vorhandenen Störgeräusch. Bei der Präambeldetektion ist es nicht hinreichend, nur auf der Basis eines einfachen Größenvergleichs zu entscheiden. Durch den am Stromnetz ständig vorhandenen Störgeräuschpegel kann das jeweilige Vorzeichen der Differenzen zufällig sein. Da der Empfänger von vornherein nicht weiß, wann eine Übertragung beginnt, muß er in einer Übertragungspause stets alle fünf in Fig. 1 links eingetragenen Differenzen am Ende einer jeden Chipdauer $T_p=8T_c$ untersuchen. Weil in einer Übertragungspause immer auf das Eintreffen einer Präambel gewartet wird, muß die Chipdauer entsprechend angepaßt sein. Es ist also notwendig, alle in Fig. 1 rechts aufgelisteten Differenzen jeweils mit einer Schwelle zu vergleichen und nur dann ein Chip als gültig zu akzeptieren, wenn die jeweilige Differenz hinreichend groß ist. Damit erfolgt eine Bewertung der Qualität für jedes einzelne Präambelchip. Diese Vorgehensweise sichert höchstmögliche Entdeckungswahrscheinlichkeit einer Präambel - und damit des Übertragungsbeginns - bei gleichzeitig äußerst geringer Falschalarmwahrscheinlichkeit, d.h. irrtümlicher Detektion einer Präambel aus dem Störgeräusch. Es kann so durchaus vorkommen, daß z.B. das erste und zweite Präambelchip (Frequenzen A und B) bei starker Störung verloren gehen. die restlichen drei Chips jedoch korrekt erkannt werden und somit kein Datenverlust auftritt. Es ist leicht einzusehen, daß jede denkbare Kombination von drei richtig erkannten Präambelchips den Empfänger korrekt synchronisiert und die einwandfreie Datendetektion einleitet. Sowohl bei der Präambel- wie auch bei der Datendetektion führt der vollständige Ausfall von bis zu zwei beliebigen Chips zu keinerlei Fehlern. Aus dieser Tatsache erklärt sich die hohe Störresistenz beim erfindungsgemäßen Einsatz frequenzagiler Bandspreiztechnik.

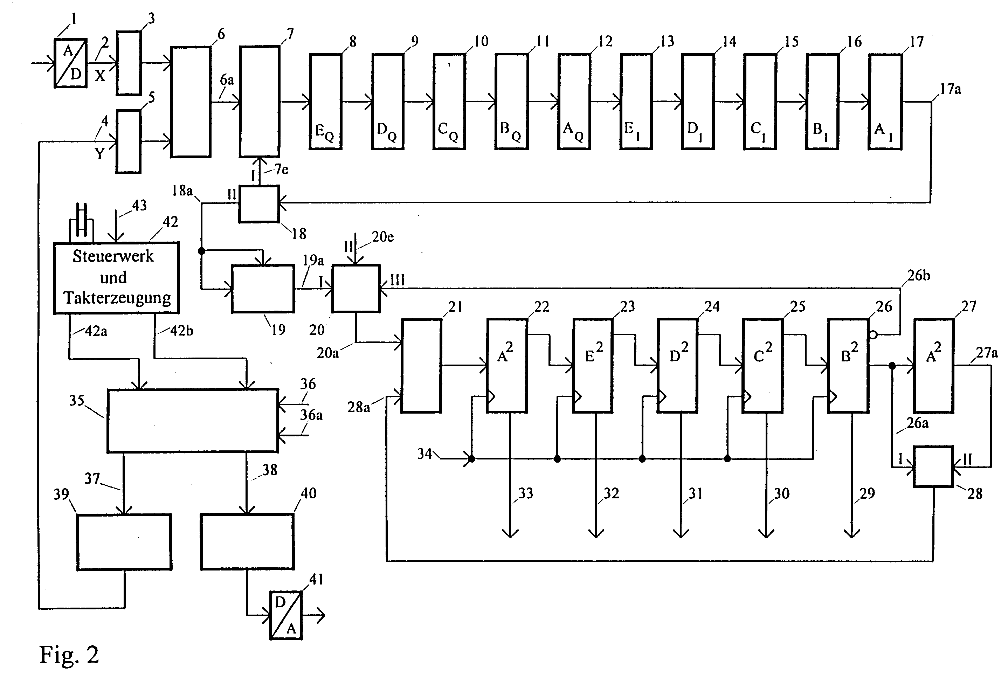

In einem inkohärenten Empfänger mit fünf parallel arbeitenden Matched Filtern muß jeder Abtastwert X des Empfangssignals mit zehn Referenzwerten Y nacheinander multipliziert werden. Anhand von Fig. 2 werden jetzt Verfahren und Einrichtung, die dieser Erfindung zu Grunde liegen im einzelnen erläutert. Zunächst wird die Arbeitsweise des Empfangszweiges vorgestellt, dann wird der Sendezweig beschrieben.

Am Empfängereingang wird das Empfangssignal nach Verstärkung und Filterung mit der Abtastfrequenz $f_a = 1/T_a$, beispielsweise $f_a = 600\text{kHz}$, abgetastet und in einem Analog/Digitalwandler 1 digitalisiert, vorzugsweise mit 8bit Auflösung. Das digitalisierte Empfangssignal wird im folgenden mit $X(iT_a)$ bezeichnet. Dabei ist $iT_a$ die diskrete Zeit, mit i=0,1,2... Zur korrelativen Verarbeitung wird das Empfangssignal X über die Leitung 2 mit dem Abtasttakt $f_a$ in ein Register 3 eingelesen. Über ein Leitungsbündel 4 werden Abtastwerte Y der Referenz aus einem Speicher 39 mit dem zehnfachen Abtasttakt $10f_a = f_m$ in ein Register 4 eingelesen. Im Multiplizierer 6 wird jeder Empfangssignalabtastwert $X(iT_a)$ mit zehn Referenzsignalabtastwerten $Y(iT_a+vT_a/10)$, mit $v=0...9$, digital multipliziert, und die zehn Teilprodukte werden anschliessend über die Signalformdauer $T_c$ - auch Chipdauer genannt - integriert, d.h. digital in separaten Akkumulatoren aufsummiert. Diese Akkumulatoren sind gemäß Fig. 2 folgendermaßen vorteilhaft realisiert: Ein Addierer 7 ist mit zehn auf ihn folgenden Registern 8...17 und einem Schalter 18 zu einer Ringstruktur zusammenschaltbar. Zu Beginn des Empfangs einer Signalform ist der Schalter 18 für die Dauer von zehn Takten der Frequenz $f_m$ in Position II, d.h. die Ringstruktur ist aufgetrennt, so daß über das Leitungsbündel 7e Nullen an den einen Eingang des Addierers 7 gelangen, während der andere Eingang über das Leitungsbündel 6a nacheinander zehn Multiplikationsergebnisse $X(iT_a) \cdot Y(iT_a+vT_a/10)$ mit $v=0...9$ vom Multiplizierer 6 erhält. Dabei gilt folgende Zuordnung:

$$Y(iT_a+0 \cdot T_a/10) \equiv \text{Sinusabtastwert "A"-Chip}$$

$$(\text{Inphasekomponente für "A"-Chip}),$$

$$Y(iT_a+1 \cdot T_a/10) \equiv \text{Sinusabtastwert "B"-Chip}$$

$$(\text{Inphasekomponente für "B"-Chip}),$$

$$Y(iT_a+2 \cdot T_a/10) \equiv \text{Sinusabtastwert "C"-Chip}$$

$$(\text{Inphasekomponente für "C"-Chip}),$$

$$Y(iT_a+3 \cdot T_a/10) \equiv \text{Sinusabtastwert "D"-Chip}$$

$$(\text{Inphasekomponente für "D"-Chip}),$$

$$Y(iT_a+4 \cdot T_a/10) \equiv \text{Sinusabtastwert "E"-Chip}$$

$$(\text{Inphasekomponente für "E"-Chip}),$$

$$Y(iT_a+5 \cdot T_a/10) \equiv \text{Cosinusabtastwert "A"-Chip}$$

$$(\text{Quadraturkomponente für "A"-Chip}),$$

$$Y(iT_a+6 \cdot T_a/10) \equiv \text{Cosinusabtastwert "B"-Chip}$$

$$(\text{Quadraturkomponente für "B"-Chip}),$$

$$Y(iT_a+7 \cdot T_a/10) \equiv \text{Cosinusabtastwert "C"-Chip}$$

$$(\text{Quadraturkomponente für "C"-Chip}),$$

$$Y(iT_a+8 \cdot T_a/10) \equiv \text{Cosinusabtastwert "D"-Chip}$$

$$(\text{Quadraturkomponente für "D"-Chip}),$$

$$Y(iT_a+9 \cdot T_a/10) \equiv \text{Cosinusabtastwert "E"-Chip}$$

$$(\text{Quadraturkomponente für "E"-Chip}).$$

Nach Ablauf von zehn Takten der Frequenz $f_m$ stehen in den Registern 8...17 folgende Ergebnisse

| Register → | | | | | | | | | |
|---|---|---|---|---|---|---|---|---|---|
| 8 | 9 | 10 | 11 | 12 | 13 | 14 | 15 | 16 | 17 |
| $E_{Q0}$ | $D_{QO}$ | $C_{Q0}$ | $B_{Q0}$ | $A_{Q0}$ | $E_{I0}$ | $D_{I0}$ | $C_{I0}$ | $B_{I0}$ | $A_{I0}$ |

Wegen i=0 gilt am Beginn einer Signalform:

$$E_{Q0}= X(0) \cdot Y(0+9 \cdot T_a/10)+0,$$

$$D_{Q0}= X(0) \cdot Y(0+8 \cdot T_a/10)+0,$$

$$C_{Q0}= X(0) \cdot Y(0+7 \cdot T_a/10)+0,$$

$$B_{Q0}= X(0) \cdot Y(0+6 \cdot T_a/10)+0,$$

$$A_{Q0}= X(0) \cdot Y(0+5 \cdot T_a/10)+0,$$

$$E_{I0}= X(0) \cdot Y(0+4 \cdot T_a/10)+0,$$

$$D_{I0}= X(0) \cdot Y(0+3 \cdot T_a/10)+0,$$

$$C_{I0}= X(0) \cdot Y(0+2 \cdot T_a/10)+0,$$

$$B_{I0} = X(0) \bullet Y(0 + 1 \bullet T_a/10) + 0,$$

$$A_{I0} = X(0) \bullet Y(0 + 0 \bullet T_a/10) + 0.$$

Die Addition von 0 ergibt sich, weil die Ringstruktur durch den Schalter 18 aufgetrennt ist. Der Sinn der obigen Reihenfolge der Komponenten wird später bei der Betrachtung der Funktion der in den Blöcken 21...28 implementierten Entscheidungslogik klar. Dabei wird auch deutlich, in welcher Weise die aus Register 17 über die Leitungsbündel 17a und 18a an den Quadrierer 19 gelieferten Digitalwerte verarbeitet werden.

Zunächst wird die Funktion der Blöcke 7...18 weiter erklärt: Nach Ablauf der erwähnten zehn Takte der Frequenz $f_m$ wird der Schalter 18 in Position I gebracht, so daß die beschriebene Ringstruktur entsteht, in der die Inhalte des Registers 17 über die nunmehr verbundenen Leitungsbündel 17a und 7e an den Addierer 7 gelangen. Jetzt werden Rechenoperationen ausgeführt, die die Inhalte der Register 8...17 folgendermaßen akkumulieren:

$$\text{Register } \quad 8: \quad E_{Qi} = X(iT_a) \bullet Y\left(iT_a + \frac{9T_a}{10}\right) + \sum_{\xi=0}^{i-1} X(\xi T_a) \bullet Y\left(\xi T_a + 9 \bullet \frac{T_a}{10}\right)$$

$$\text{Register } \quad 9: \quad D_{Qi} = X(iT_a) \bullet Y\left(iT_a + \frac{8T_a}{10}\right) + \sum_{\xi=0}^{i-1} X(\xi T_a) \bullet Y\left(\xi T_a + 8 \bullet \frac{T_a}{10}\right)$$

$$\text{Register } 10: \quad C_{Qi} = X(iT_a) \bullet Y\left(iT_a + \frac{7T_a}{10}\right) + \sum_{\xi=0}^{i-1} X(\xi T_a) \bullet Y\left(\xi T_a + 7 \bullet \frac{T_a}{10}\right)$$

$$\text{Register } 11: \quad B_{Qi} = X(iT_a) \bullet Y\left(iT_a + \frac{6T_a}{10}\right) + \sum_{\xi=0}^{i-1} X(\xi T_a) \bullet Y\left(\xi T_a + 6 \bullet \frac{T_a}{10}\right)$$

$$\text{Register } 12: \quad A_{Qi} = X(iT_a) \bullet Y\left(iT_a + \frac{5T_a}{10}\right) + \sum_{\xi=0}^{i-1} X(\xi T_a) \bullet Y\left(\xi T_a + 5 \bullet \frac{T_a}{10}\right)$$

$$\text{Register } 13: \quad E_{Ii} = X(iT_a) \bullet Y\left(iT_a + \frac{4T_a}{10}\right) + \sum_{\xi} (\xi T_a) X \bullet Y\left(\xi T_a + 4 \bullet \frac{T_a}{10}\right)$$

$$\text{Register } 14: \quad D_{Ii} = X(iT_a) \bullet Y\left(iT_a + \frac{3T_a}{10}\right) + \sum_{\xi=0}^{i-1} (\xi T_a) X \bullet Y\left(\xi T_a + 3 \bullet \frac{T_a}{10}\right)$$

$$\text{Register } 15: \quad C_{Ii} = X(iT_a) \bullet Y\left(iT_a + \frac{2T_a}{10}\right) + \sum_{\xi=0}^{i-1} (\xi T_a) X \bullet Y\left(\xi T_a + 2 \bullet \frac{T_a}{10}\right)$$

$$\text{Register } 16: \quad B_{Ii} = X(iT_a) \bullet Y\left(iT_a + \frac{1T_a}{10}\right) + \sum_{\xi=0}^{i-1} (\xi T_a) X \bullet Y\left(\xi T_a + 1 \bullet \frac{T_a}{10}\right)$$

$$\text{Register } 17: \quad A_{Ii} = X(iT_a) \bullet Y\left(iT_a + \frac{0T_a}{10}\right) + \sum_{\xi=0}^{i-1} (\xi T_a) X \bullet Y\left(\xi T_a + 0 \bullet \frac{T_a}{10}\right)$$

Unter der Voraussetzung, daß eine Signalform die Chipdauer $T_c = N \bullet T_a$ hat, erhält man nach i=N Takten der Frequenz $f_a$, also nach 10N Takten der Frequenz $f_m$ die gewünschten zehn Signalkomponenten in den Registern 8...17 von Fig. 2:

| Register → | | | | | | | | | |
|---|---|---|---|---|---|---|---|---|---|
| 8 | 9 | 10 | 11 | 12 | 13 | 14 | 15 | 16 | 17 |
| $E_Q$ | $D_Q$ | $C_Q$ | $B_Q$ | $A_Q$ | $E_I$ | $D_I$ | $C_I$ | $B_I$ | $A_I$ |

Für die Entscheidung, ob ein Chip einem "H" oder einem "L"-Bit zuzuordnen ist, sind jetzt die Signalkomponenten gemäß dem Quadraturempfängerprinzip wie folgt geometrisch zu addieren

$$A = \sqrt{A_I^2 + A_Q^2}; \quad B = \sqrt{B_I^2 + B_Q^2}; \quad C = \sqrt{C_I^2 + C_Q^2}; \quad D = \sqrt{D_I^2 + D_Q^2}; \quad E = \sqrt{E_I^2 + E_Q^2},$$

und miteinander - wie anhand von Fig. 1 gezeigt wurde - durch Differenzbildung zu vergleichen. Der Vergleich kann ohne Nachteil auch mit den quadrierten Werten $A^2...E^2$ durchgeführt werden; d.h. das Berechnen der Wurzel bei jeder Komponente kann eingespart werden.

Um im Empfänger zuverlässig den Beginn einer Datenübertragung erkennbar zu machen, ist - wie weiter oben ausgeführt wurde - das Senden einer Präambel vorteilhaft. Bei der Präambeldetektion ist - wie gezeigt wurde - ein einfacher Größenvergleich der Differenzen nicht ratsam, denn durch den am Stromnetz ständig vorhandenen Störgeräuschpegel füllen sich die Register 8...17 stets bis zu einem gewissen Maß. Ein einfacher Größenvergleich für eine Präambelchipentscheidung wäre fehleranfällig, weil sich aus der stochastischen Natur der Störgeräusche statistische Schwankungen der Registerinhalte ergeben. Es ist deshalb sinnvoll, die Möglichkeit einer Bewertung der Detektionsqualität für jedes einzelne Präambelchip vorzusehen. Dazu muß jede der fünf Differenzen $A^2$-$B^2$...$E^2$-$A^2$ nach Ablauf eines Präambel-Chipintervalls mit einer Schwelle verglichen werden.

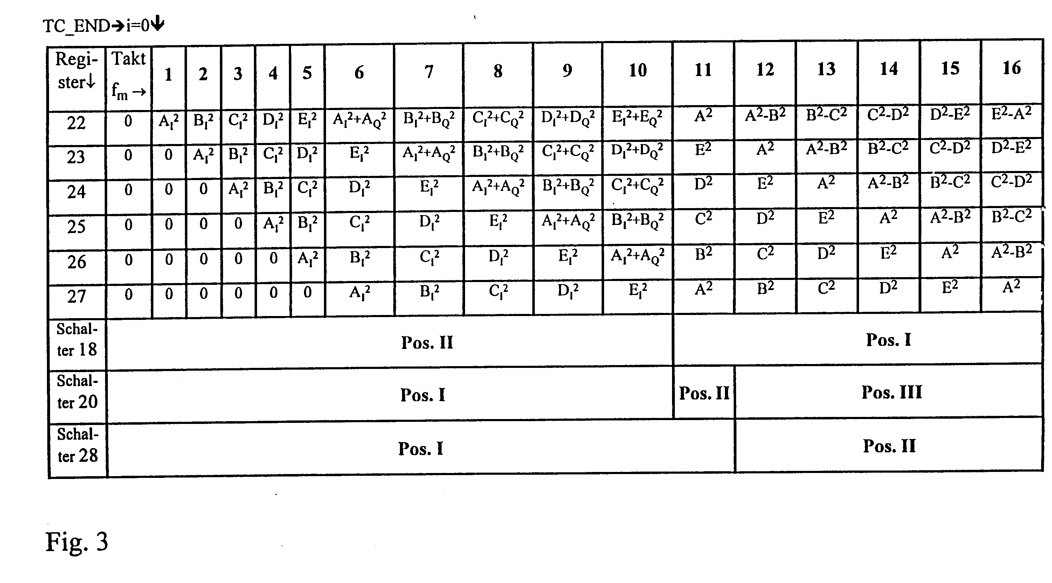

Im folgenden wird zur Lösung dieser komplexen Aufgabe ein Verfahren und die zugehörige erfindungsgemäße Einrichtung vorgestellt, die aus den Funktionsblöcken 19...28 in der Ausführungsform nach Fig. 2 besteht. Zur Verdeutlichung des erfindungsgemäßen Verfahrens, das in Fig. 2 implementiert ist, dient Fig. 3. Zur Erläuterung wird angenommen, daß gerade eine Signalform der Dauer $T_c = N \cdot T_a$ komplett empfangen wurde. Dieser Zustand ist im übrigen stets nach $Z \cdot N$ Abtasttakten bzw. $10 \cdot Z \cdot N$ Multiplikationen erreicht, wobei Z eine positive ganze Zahl ist. Der Laufindex i beginnt dann wieder bei Null. Jetzt wird der Schalter 18 für genau zehn Takte der Frequenz $f_m = 10 \cdot f_a$ in Position II gebracht, so wie bereits weiter oben für i=0 geschildert. Nunmehr ist das Leitungsbündel 17a mit 18a verbunden und liefert in zehn Taktschritten die Inhalte der Register 8...17 an den Quadrierer 19. Der Quadrierer 19 ist vorzugsweise als Schaltnetz mit geringer Durchlaufzeit, die sehr viel kleiner als $1/f_m$ ist, nach dem aus Standard-Lehrbüchern über Computer Arithmetik bekannten Dadda-Prinzip realisiert. Über einen Schalter 20, der drei verschiedene Schaltpositionen einnehmen kann, und der sich zunächst in Position I befindet, wird das Quadrierergebnis über die Leitungsbündel 19a und 20a an einen Addierer 21 geliefert. Der zweite Eingang des Addierers 21 erhält über einen weiteren Schalter 28, der sich ebenfalls in Position I befindet, den Inhalt des Registers 26 über die Leitungsbündel 26a und 28a. Im Addierer 21 werden die beiden genannten Eingangswerte addiert, und das Ergebnis wird in Register 22 ablegt. Man erkennt, daß der Addierer 21 und die fünf Register 22...26 über den Schalter 28 zu einer Ringstruktur zusammengeschlossen sind, solange der Schalter 28 in Position I bleibt. Ein weiteres Register 27, das später in die Ringstruktur einbezogen wird, wird für die Differenzbildung benötigt. Die Ringstruktur ermöglicht in vorteilhafter Weise und mit geringem Hardwareaufwand zunächst die Berechnung der quadrierten Korrelationswerte $A^2...E^2$. Dann können durch einfache Modifikationen der Ringstruktur, die lediglich in einem Umschalten der Schalter 18, 20 und 28 bestehen, die gesuchten Differenzen $A^2$-$B^2$...$E^2$-$A^2$ in eleganter hardwaresparender Weise ermittelt werden. Anhand von Fig. 3 wird das Verfahren verdeutlicht. Dabei wird auch der Sinn der Festlegung der oben angeführten Reihenfolge der Registerinhalte, nämlich $E_Q \Rightarrow 8...A_I \Rightarrow 17$ klar. Am Ende eines Chipintervalls steht in den Registern 22...27 der Wert Null. Für die Dauer von zehn Takten der Frequenz $f_m$ bleiben die Schalter 18, 20 und 28 in den oben beschriebenen Positionen. In Fig. 3. erkennt man wie sich im Laufe der zehn Takte die gesuchten Ergebnisse $A^2...E^2$ schrittweise aufbauen, so daß im zehnten Takt folgende Zustände erreicht sind:

| Register → | | | | | |
|---|---|---|---|---|---|
| 22 | 23 | 24 | 25 | 26 | 27 |
| $E^2$ | $D^2$ | $C^2$ | $B^2$ | $A^2$ | $E_I^2$ |

Jetzt wird der Schalter 18 zurück in Position I gebracht und der Ring aus Addierer 7 mit den zehn auf ihn folgenden Registern 8...17 für die Verarbeitung eines neuen Chips wie oben beschrieben wiederhergestellt. Schalter 20 kommt für einen Takt der Frequenz $f_m$ in Position II, wobei über die Leitungsbündel 20e und 20a der Wert Null an einen Eingang des Addierers 21 gelangt. Schalter 28 verbleibt noch in Position I und liefert den Inhalt von Register 26 ($A^2$) an den zweiten Eingang des Addierers 21, so daß sich nach Ablauf des elften Taktschrittes folgende Registerinhalte einstellen:

| Register → | | | | | |
|---|---|---|---|---|---|
| 22 | 23 | 24 | 25 | 26 | 27 |
| $A^2$ | $E^2$ | $D^2$ | $C^2$ | $B^2$ | $A^2$ |

Man erkennt, daß der alte, nicht mehr benötigte Inhalt $E_i^2$ aus Register 27 verlorengegangen ist, und daß $A^2$ nun in zwei Registern, nämlich 22 und 27 vorhanden ist. Mit dieser Konstellation ist jetzt eine vorteilhafte Ausgangsbasis zur Berechnung der gesuchten Differenzen innerhalb von weiteren sechs Taktschritten erreicht. Nach Ablauf des elften Taktes werden der Schalter 20 in Position III und Schalter 28 in Position II gebracht, so daß die negierten Ausgänge des Registers 26 nunmehr über die Leitungsbündel 26b und 20a an den oberen Eingang des Addierers 21 gelangen, während der untere Addiereingang über die Leitungsbündel 27a und 28a den jeweiligen Inhalt von Register 27 erhält. Die Addition des negierten Inhalts von Register 26 zum Inhalt von Register 27 entspricht mathematisch näherungsweise einer Subtraktion in Zweierkomplementdarstellung, da die Negation das Einerkomplement bildet. Die Ergebnisse werden als Zweierkomplementzahlen interpretiert, woraus sich - wie gleich gezeigt wird - eine besonders vorteilhafte Datenbitdetektion ergibt. Am Ende des elften Taktschritts liegen folgende Registerinhalte vor:

| Register $\rightarrow$ | | | | | |
|---|---|---|---|---|---|
| 22 | 23 | 24 | 25 | 26 | 27 |
| $A^2-B^2$ | $A^2$ | $E^2$ | $D^2$ | $C^2$ | $B^2$ |

Der weitere Ablauf in den folgenden fünf Takten 12...16 ist anhand von Fig. 3 leicht nachvollziehbar. Nach dem sechzehnten Taktschritt stehen die gesuchten Ergebnisse in den Registern 22..26 bereit:

| Register $\rightarrow$ | | | | |
|---|---|---|---|---|
| 22 | 23 | 24 | 25 | 26 |
| $E^2-A2$ | $D^2-E^2$ | $C^2-D^2$ | $B^2-C^2$ | $A^2-B2$ |

Mit Ablauf des sechzehnten Taktes werden die Schalter 20 und 28 wieder in Position I gebracht und die Entscheidungshardware ist für die Verarbeitung eines neuen Chips bereit - s. Fig. 2. Schalter 18 befindet sich bereits seit Taktschritt elf in Position I und verbleibt dort bis zum Ablauf des aktuellen Chipintervalls. In den Registern 22...26 stehen die gesuchten fünf Differenzen gemäß obiger Tabelle für die Weiterverarbeitung bis zur Bitentscheidung zur Verfügung. Dazu ist eine serielle Ausgabe über fünf Leitungen 29...33 vorgesehen, wobei ein Auslesetakt beliebiger Frequenz über Leitung 34 eingebbar ist. Die Anordnung der Zweierkomplement-Binärzahlen in den Registern erfolgt so, daß jeweils das höchstwertige Bit (MSB $\equiv$ Most Significant Bit) zuerst am Ausgang, d.h. an den Leitungen 29...33 erscheint. Bei der Datendetektion - nach erfolgreichem Präambelempfang - ist dann lediglich das Lesen der fünf MSBs der Differenzen erforderlich, denn z.B. für $A^2>E^2$ wäre die berechnete Differenz in Register 22 negativ und damit das MSB an Leitung 33 gleich Eins $\equiv$ "H". Werden an mindestens drei der Leitungen 29...33 "H"-Pegel gelesen, wird auf ein "H"-Bit entschieden, andernfalls auf ein "L"-Bit - vgl. auch Fig. 1.

Bei der Präambeldetektion ist eine intelligente Bewertung der Differenzen $A^2-B^2...E^2-A^2$ von großem Vorteil. Dazu kann z.B. ein Mikrocontroller die Differenzen $A^2-B^2...E^2-A^2$ über die Leitungen 29..33 seriell auslesen und per Software mit einer geeignet zu wählenden Schwelle vergleichen. Diese Schwelle wird als Prozentsatz des maximal möglichen Wertes für eine Komponente $A^2...E^2$ gewählt, der sich bei ungestörtem Empfang eines Präambelchips bei optimaler Aussteuerung des A/D-Wandlers im Empfänger ergeben würde. In der Praxis wird dieser Prozentsatz etwa zwischen 2% und 10% liegen. Der günstigste Wert hängt von der jeweiligen Störumgebung ab. Es ist deshalb vorteilhaft, ihn adaptiv, z.B. abhängig von der empfangenen Störleistung einzustellen. Das kann durch ständige Beobachtung der Differenzen $A^2-B^2...E^2-A^2$ in Sendepausen geschehen. Wenn relativ wenig Störgeräusch vorhanden ist, werden die Differenzen $A^2-B^2...E^2-A^2$ klein sein und wenig streuen. Dann wird man die Schwelle in der Gegend von 2% wählen. Mit wachsenden störbedingten Differenzen $A^2-B^2...E^2-A^2$ wird die Schwelle in Richtung 10% verschoben. Schwellenwerte über 10% haben sich in der Praxis als wenig sinnvoll erwiesen. Der Beginn einer Informationsübertragung läßt sich so in den unterschiedlichsten Störszenarien mit dem erfindungsgemäßen Verfahren und z.B. der Einrichtung nach Fig. 2 auf einfache Weise und mit hoher Sicherheit vom stets vorhandenen Störgeräusch an einem Stromnetz unterscheiden. Dadurch sind Irritationen (Fehlalarme) des Empfängers auch bei beträchtlichem Störpegel auszuschließen und gesendete Daten können fehlerfrei empfangen werden.

Für die zuverlässige und störresistente Synchronisation beim Empfangen und Senden läßt sich, wie weiter oben erwähnt, die Netzwechselspannung vorteilhaft als globales Referenzsignal verwenden. Um Mehrdeutigkeiten in einem Drehstromnetz auszuschließen, ist es vorteilhaft, den Beginn einer Datenübertragung an einen Nulldurchgang der Netzspannung zu koppeln. Bei Drehstrom ergibt sich dann ein Zeitraster von ca. 3,3ms - siehe z.B. DE 43 23 376.7. Dieses Zeitraster hat sich für die Präambel in der Praxis bewährt, weil dann jeder Nulldurchgang der Netzwechselspannung den Anfang eines Präambelchips markiert, ganz gleich an welcher Phase eines Drehstromnetzes und in welcher Richtung (von positiv nach negativ oder umgekehrt) er auftritt. Ein typischer Senderahmen besteht beispielsweise aus einer Präambel mit fünf Präambelchips und aus einem Datenfeld, die sich beide in das aus der Netzwechselspannung abgeleitete Zeitraster einfügen - s. auch Fig. 1. Dabei ist es vorteilhaft, für die Präambel eine hohe Detektionssicherheit vorzusehen, weil ein Entdeckungsverlust der Präambel oder ein Falschalarm zu einer großen Menge verlorener Daten führt. Denn typische Datenfeldlängen für sinnvolle technische Anwendungen umfassen ca. 100bit. Die im allgemeinen sehr komplexe Aufgabe, eine hohe Entdeckungssicherheit für die Präambel bei gleichzeitig geringer Falschalarmwahrscheinlichkeit zu erzielen ist mit der vorliegenden Erfindung elegant und zuverlässig lösbar.

Ein typisches Telegramm beginnt mit fünf Präambelchips der Dauer $T_p=8T_c=3,3ms$. Danach folgen z.B. 100 Datenbits, die jeweils aus fünf Chips der Dauer $T_c=416,6\mu s$ entsprechend Fig. 1 zusammengesetzt sind. Die Chiprate beträgt also $2400s^{-1}$, und die Datenrate ist ein Fünftel davon, also $r_D=480bit/s$.

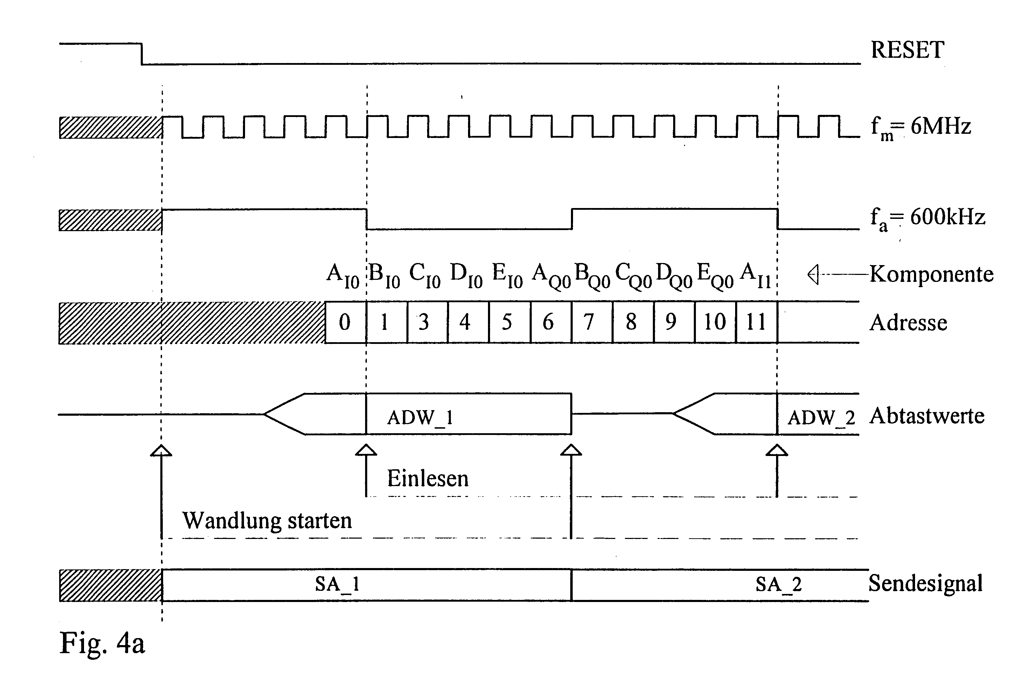

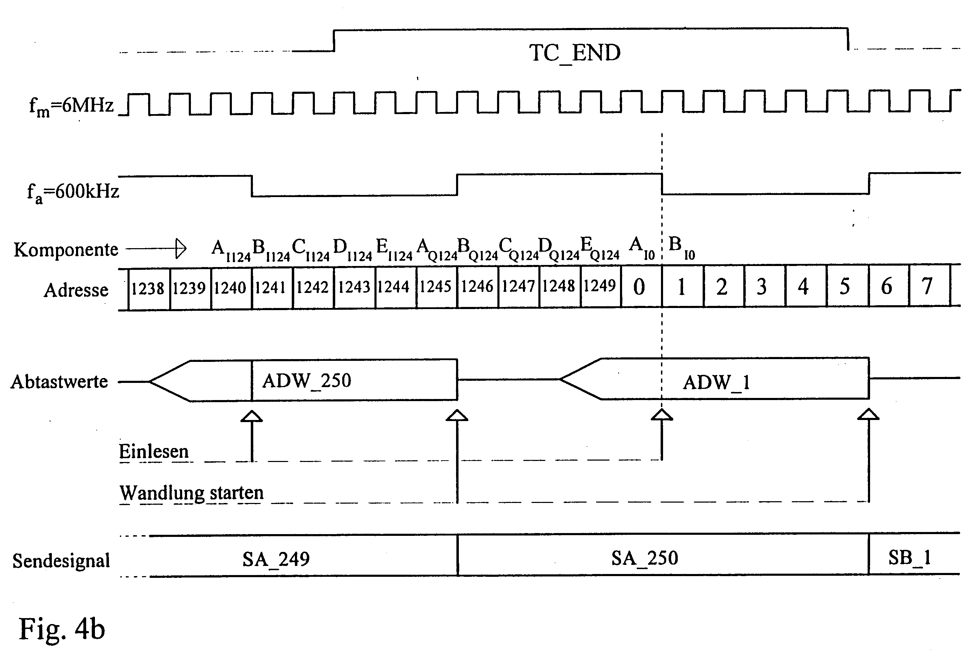

Im folgenden wird nun anhand von Fig. 2 und den Timing-Schemata in Fig. 4a/4b die Funktionsweise der Signalsyntheseeinrichtungen zur Generierung der Referenzsignale Y und der Sendesignalformen beschrieben. Wie eingangs erwähnt, ist es Aufgabe der vorliegenden Erfindung, Vollduplex-Datenübertragung mit phasenkontinuierlichen frequenzsprungmodulierten Signalformen zu bewerkstelligen. Dazu dienen die Funktionsblöcke 35 (programmierbarer Adreßzähler für Empfangs- und Sendeseite), 39 (Speicher für Referenzsignal-Abtastwerte), 40 (Speicher für Sendesignalabtastwerte) und 42 (Steuerwerk und Takterzeugung) in Fig. 2. Bei der beschriebenen Ausführungsform der Erfindung wird von einem Haupttakt von 12MHz am Funktionsblock 42 ausgegangen, aus dem durch Teilen durch zwanzig der Abtasttakt der Frequenz $f_a=600kHz$ über Leitung 42a und durch Teilen durch zwei der dazu passende Multiplikationstakt mit $f_m=6MHz$ über Leitung 42b zur Verfügung gestellt wird. Die Leitung 43 dient dazu, dem Steuerwerk das Erreichen des Endes einer Signalformdauer $T_c$ beim Empfang zu signalisieren; sie erhält für die folgenden Erläuterungen den Namen TC_END (s. auch Fig. 4b oben). $T_c$ kann je nach gewählter Datenrate unterschiedliche Werte annehmen. Hierin ist eine Besonderheit der vorliegenden Erfindung zu sehen, denn Modifikationen der wichtigsten Systemparameter wie Datenrate, Signalform- und Frequenzwahl sind ohne Hardwareänderungen durchführbar; lediglich die Inhalte der Abtastwertespeicher 39, 40 und das Programm für einen Mikrocontroller, der einfache, langsame Steuer- und Datentransferaufgaben auszuführen hat, sind zu ändern.

Der Referenzsignal-Abtastwertespeicher 39 kann in Form eines ROM, PROM, EPROM, EEPROM oder RAM realisiert sein, und er wird vom empfangsseitigen Teil des programmierbaren Adreßzählers 35 über das Leitungsbündel 37 adressiert, wobei sich alle Referenzwerte Y in Adreßbereichen gleicher Länge, entsprechend einem festen Zählerzyklus, z.B. der Länge 1250 befinden. Aus Tabelle 1 ist ersichtlich, daß jede der dort aufgeführten Frequenzen sich mit 125 Abtastwerten generieren läßt. Das gilt sowohl für die Sinus- als auch für die Cosinusdarstellung. Somit genügen für einen beliebigen Satz von fünf Frequenzen, die jeweils in Sinus- und Cosinuslage benötigt werden 1250 Abtastwerte. In der oberen Hälfte von Fig. 4a/4b ist der zeitliche Ablauf beim Empfang verdeutlicht. Die Referenzsignal-Abtastwerte Y werden mit dem Multiplikationstakt $f_m=6MHz$ über das Leitungsbündel 4 in das Latch 5 eingelesen, während das digitalisierte Empfangssignal X über das Leitungsbündel 2 mit der Abtastfrequenz $f_a=600kHz$ ins Latch 3 gelangt - vgl. Fig. 2. In Fig. 4a/4b erkennt man, daß das Einlesen eines Empfangssignalabtastwertes X stets zeitgleich mit dem Einlesen eines Referenzwertes $A_{li}$ erfolgt, und daß dann neun weitere Referenzwerte $B_{li}...E_{Qi}$ im Raster des Taktes der Dauer $T_m=1/f_m=T_a/10$, mit $T_a=1/f_a$ folgen, wobei gilt:

$$A_{li}: \quad Y(iT_a+0\cdot T_a/10) \equiv \text{Sinusabtastwert "A"-Chip}$$

$$\text{(Inphasekomponente für "A"-Chip)},$$

$$B_{li}: \quad Y(iT_a+1\cdot T_a/10) \equiv \text{Sinusabtastwert "B"-Chip}$$

$$\text{(Inphasekomponente für "B"-Chip)},$$

$$C_{li}: \quad Y(iT_a+2\cdot T_a/10) \equiv \text{Sinusabtastwert "C"-Chip}$$

$$\text{(Inphasekomponente für "C"-Chip)},$$

$$D_{li}: \quad Y(iT_a+3\cdot T_a/10) \equiv \text{Sinusabtastwert "D"-Chip}$$

$$\text{(Inphasekomponente für "D"-Chip)},$$

$$E_{Ii}: \; Y(iT_a + 4 \cdot T_a/10) \equiv \text{Sinusabtastwert "E"-Chip}$$

(Inphasekomponente für "E"-Chip),

$$A_{Qi}: \; Y(iT_a + 5 \cdot T_a/10) \equiv \text{Cosinusabtastwert "A"-Chip}$$

(Quadraturkomponente für "A"-Chip),

$$B_{Qi}: \; Y(iT_a + 6 \cdot T_a/10) \equiv \text{Cosinusabtastwert "B"-Chip}$$

(Quadraturkomponente für "B"-Chip),

$$C_{Qi}: \; Y(iT_a + 7 \cdot T_a/10) \equiv \text{Cosinusabtastwert "C"-Chip}$$

(Quadraturkomponente für "C"-Chip),

$$D_{Qi}: \; Y(iT_a + 8 \cdot T_a/10) \equiv \text{Cosinusabtastwert "D"-Chip}$$

(Quadraturkomponente für "D"-Chip),

$$E_{Qi}: \; Y(iT_a + 9 \cdot T_a/10) \equiv \text{Cosinusabtastwert "E"-Chip}$$

(Quadraturkomponente für "E"-Chip).

Ein Zyklus der Empfangsseite des Adreßzählers 35 umfaßt somit 125 Empfangssignalabtastwerte X. Während der Chipdauer $T_c$=416,6 µs werden demnach genau 250 Empfangssignalabtastwerte X verarbeitet und die Empfangsseite des Adreßzählers 35 führt zwei Zyklen der Länge 1250 aus. Für ein Präambelchip der Dauer $T_p$=8$T_c$=3,3ms werden dann 2000 Empfangssignalabtastwerte X verarbeitet, und die Empfangsseite des Adreßzählers 35 führt sechzehn Zyklen der Länge 1250 aus. Das Ende einer Chipdauer wird - wie erwähnt - dem Steuerwerk 42 über eine Leitung 43 (TC_END), z.B. von einem Mikrocontroller signalisiert. TC_END tritt somit typischerweise asynchron zu den Takten $f_a$ und $f_m$ auf. Deshalb erfolgt die Registrierung von TC_END - wie in Fig. 4b oben rechts dargestellt - stets mit Ablauf eines Zählerzyklusses der Empfangsseite des Adreßzählers 35, also beim Übergang von 1250 nach Null. Die Registrierung von TC_END löst die weiter oben beschriebenen Abläufe zur Berechnung der Differenzen A²-B²...E²-A² aus, und nach ca. 5µs stehen die Ergebnisse an den Leitungen 29...33 zur Verfügung - vgl. auch Fig. 2.

Im Sendebetrieb, der gleichzeitig oder auch abwechselnd mit dem Empfangsbetrieb stattfinden kann, werden einem zweiten Speicher 40, der die Abtastwerte der Sendesignalformen enthält, und der in Form eines ROM, PROM, EPROM, EEPROM oder RAM realisiert sein kann, aus dem senderseitigen Teil des Adreßzählers 35 über ein Leitungsbündel 38 Adressen im Raster der Abtasttaktfrequenz $f_a$=600kHz zugeführt. Die Abtastwerte der fünf Chips A... E (Frequenzen $f_1...f_5$) sind jeweils in Adreßbereichen der Länge 125 abgelegt. Insgesamt sind also 625 Abtastwerte abzuspeichern. Bei der Chipdauer $T_c$=416,6µs wird jeder zu einer Frequenz gehörige Adreßbereich genau zweimal hintereinander ausgelesen (250 Werte). Beim Senden eines Präambelchips der Dauer $T_p$=8$T_c$=3,3ms wird demnach jeder Adreßbereich sechzehnmal hintereinander ausgelesen (2000 Werte). Dabei können - wie weiter oben erwähnt - die Frequenzen der Präambelchips von denen der Datenchips verschieden sein. In diesem Fall wären die Präambelchip-Abtastwerte natürlich in anderen Adreßbereichen als die Abtastwerte der Datenchips abzulegen.

Die zu sendenden Datenbits werden über die Leitung 36 zugeführt. Beim Senden eines "H"-Bits wird vom senderseitigen Teil des Adreßzählers 35 die Frequenzfolge A, B, C, D, E adressiert, während bei einem "L"-Bit die Reihenfolge E, A, B, C, D ist - vgl. Fig. 1. Die Aufforderung zum Senden einer Präambel wird dem senderseitigen Teil des Adreßzählers 35 über eine Leitung 36a (PR) signalisiert. Im Unterschied zum Senden eines "H"-Bits wird jetzt jeder Adreßbereich der Länge 125 statt zweimal sechzehnmal durchlaufen. Im unteren Teil von Fig. 4a/4b ist die zeitliche Rasterung bei Ausgabe der Sendesignalabtastwerte für den Anfang des Sendens eines "H"-Bits mit der Chipdauer $T_c$=416,6µs dargestellt. Mit jeder Vorderflanke des Abtasttaktes $f_a$=600kHz erscheint ein neuer Abtastwert SA_i am Ausgang des Speichers 40 und wird dem D/A-Wandler 41 zugeführt. Nach Tiefpaßfilterung und Verstärkung wird das Sendesignal dann ins Stromnetz eingekoppelt. Nach Ablauf von zwei Zyklen der Länge 125, d.h. der Abtastwert SA_125 wurde zum zweitenmal adressiert, wird als Nächstes der erste Abtastwert SB_1 der zweiten Sendefrequenz $B \equiv f_2$ ausgegeben - s. Fig. 4b unten rechts. Nachdem in entsprechender Weise alle fünf Frequenzen des "H"-Bits generiert wurden, kommt das nächste Datenbit, das inzwischen an Leitung 36 bereitgehalten werden muß, zur Aussendung. Das zu sendende Bit kann zu einem beliebigen Zeitpunkt an die Leitung 36 gegeben werden. Es wird immer nur nach Ablauf der festgelegten Zahl von Zählerzyklen berücksichtigt. Pro Datenbit werden also 1250 Abtastwerte im Taktraster $f_a$=600kHz ausgegeben, und es ergibt sich die Bitdauer $T_B$=1250•1,66$\mu s$=2,0833$ms$, entsprechend der Datenrate $r_D$=480bit/s.

Als besonderes Merkmal bei der Ausgestaltung der Sendeseite der vorliegenden Erfindung ist hervorzuheben, daß Phasenkontinuität gewährleistet ist, d.h. beim Frequenzwechsel kommt es zu keinerlei abrupten Phasenänderungen - es liegt CPFH-Modulation vor (CPFH $\equiv$ Continuous Phase Frequency Hopping). Die strengen Vorschriften bezüglich der Außerbandstörleistung nach EN 50 065-1 sind mit FH ohne Phasenkontinuität nicht einzuhalten. Die Aufgabe, Phasenkontinuität an den Chipgrenzen zu garantieren, wird erfindungsgemäß dadurch gelöst, daß ein Frequenzwechsel stets mit dem Abschluß eines Zählerzyklusses zusammenfällt. D.h. ein Frequenzwechsel wird synchron mit einer Vorderflanke des Taktes $f_a$ vorgenommen, die den senderseitigen Adreßzähler vom Stand 125 auf Eins setzt.

Man erkennt aus den vorstehenden Ausführungen, daß die Implementierung verschiedener weiter oben genannter Datenraten wie z.B. $r_D$=960, 240, 120, 60bit/s durch einfache Modifikationen des senderseitigen Teils des Adreßzählers 35 möglich ist. Es muß lediglich die Anzahl der Durchläufe der Adreßbereiche der Länge 125 einer jeden Frequenz A...E geändert werden. Man erhält folgendes Schema:

| Datenrate in bit/s | 960 | 480 | 240 | 120 | 60 |
|---|---|---|---|---|---|
| Adreßzähler-Durchläufe | 1 | 2 | 4 | 8 | 16 |
| ausgegebene Abtastwerte | 625 | 1250 | 2500 | 5000 | 10.000 |

Empfangsseitig ist bei Änderung der Datenrate keine Hardwareänderung erforderlich. Das Setzen des Signals TC_END an Leitung 43 des Steuerwerks 42, z.B. durch einen Mikrocontroller, bestimmt das Ende einer Chipdauer, wobei 1250 Abtastwerte im Taktraster $f_m$=6MHz im beschriebenen Ausführungsbeispiel ein Minimum sind und einer Chipdauer $T_c$=208,3$\mu$s entsprechen (Datenrate $r_D$=960bit/s). Für $r_D$=60bit/s wäre somit das Signal TC_END in Abständen von 3,3ms, also nach jeweils 20.000 Abtastwerten entsprechend sechzehn Adreßzählerdurchläufen zu setzen. Zu beachten ist lediglich, daß TC_END, wie in Fig. 4b gezeigt, etwas länger als eine Periode des Taktes $f_a$ anstehen sollte. Weil TC_END stets mit einer Vorderflanke von $f_a$ registriert wird, ist gewährleistet, daß der letzte Abtastwert einer Signalform immer mit allen zehn Referenzwerten multipliziert wurde, und daß der erste Abtastwert einer neuen Signalform korrekt mit der Abtastwertefolge $A_{I0}...E_{Q0}$ multipliziert wird. Da inkohärenter Empfang vorliegt, und eine phasenunempfindliche Quadraturempfängerstruktur realisiert ist, spielt die Phasenlage der Referenz in Bezug zum Empfangssignal keine Rolle.

Die Vorgehensweise zur Implementierung anderer FH-Schemata mit m=p (z.B. p=3, 7, 9) Frequenzen pro Datenbit bei dem erfindungsgemäßen Verfahren und der zugehörigen Einrichtung ist für den Fachmann mit folgenden Hinweisen nachvollziehbar: Empfängerseitig ist für m=p die Zahl der Register 8...17 in Fig. 2 von zehn auf 2·p (z.B. 6, 14, 18) zu ändern. Ebenso muß in der Entscheidungslogik die Zahl der Register 22...26 in Fig. 2 auf die Anzahl p (z.B. 3, 7, 9) gebracht werden. Für die Synthese der Referenz Y muß die Zykluslänge im Speicher 39 von 10·125 nunmehr auf 2·p·125 (z.B. 750, 1750, 2250) angepaßt werden. Senderseitig sind statt 5·p·125=625 jetzt p·125 (z.B. 375, 875, 1125) Abtastwerte im Speicher 40 bereitzuhalten und passend auszugeben. Des weiteren kann in anderen Ausführungsformen der vorliegenden Erfindung z.B. eine von 600kHz verschiedene Abtastfrequenz gewählt werden. Dadurch ändert sich das kleinste gemeinsame Vielfache der Abtastwerteanzahl (125 in Tabelle 1). Außerdem kann eine geringe Verschiebung der Frequenzen nach Tabelle 1 bei geänderter Abtastfrequenz von Vorteil sein.

**Patentansprüche**

**1.** Verfahren zur digitalen Signalsynthese und -verarbeitung für frequenzagile Bandspreizsysteme zur Informationsübertragung über elektrische Energieverteilnetze unter Nutzung der Netzwechselspannung als Synchronisationsreferenz, <u>dadurch gekennzeichnet,</u> daß

a) vielkanalige Vollduplex-Datenübertragung mittels schneller Frequenzsprungmodulation ermöglicht wird, wobei jedes zu sendende Datenbit unter Einsatz einer ungeraden Anzahl m von Signalformen verschiedener Frequenz übertragen wird, und wobei ein kontinuierlicher Phasenübergang beim Frequenzwechsel innerhalb eines Datenbits und von Datenbit zu Datenbit gewährleistet ist,

b) eine zur Kennzeichnung des Beginns einer Datenübertragung gesendete Präambel mit gegenüber einem Datenchip erhöhter Chipenergie übertragen wird, um empfängerseitig hohe Detektionssicherheit und geringe Falschalarmwahrscheinlichkeit sicherzustellen,

c) die jeweils gewünschte Zahl m der Signalformen verschiedener Frequenz pro Datenbit und die dabei benutzten Frequenzen sowie Frequenzsprungrate und Datenrate und der Aufbau der Präambel ohne Hardwareänderungen z.B. über einen Mikroprozessor, Mikrocontroller oder eine Digitalschaltung vergleichbarer Funktion einstellbar sind,

d) empfängerseitig 2m parallel arbeitende digitale signalangepaßte Filter für den gleichzeitigen inkohärenten Optimalempfang aller m jeweils eingesetzten Signalformen vorgesehen sind, wobei für jede der m Signalformen ein der jeweiligen Signalformenergie entsprechender digitaler Zahlenwert gebildet wird,

e) mittels der m der jeweiligen Signalformenergie entsprechenden digitalen Zahlenwerte m charakteristische Differenzen in digitaler Form ermittelt werden, die die Datenbit- und die Präambelchipentscheidung in einfacher Weise ermöglichen,

f) eine intelligente Bewertung der m charakteristischen Differenzen erfolgt, indem ein als Steuereinheit eingesetzter Mikroprozessor, Mikrocontroller oder eine Digitalschaltung vergleichbarer Funktion die Differenzen jeweils seriell über m Leitungen liest und per Software mit einer frei wählbaren Schwelle vergleicht, wobei diese Schwelle als Prozentsatz des maximal möglichen Autokorrelationswertes einer Signalform gewählt ist, und wobei die Schwelle adaptiv, abhängig von empfangener Stör- und/oder Nutzsignalenergie eingestellt werden kann,

g) sowohl die Erzeugung der Sendesignale als auch der Referenzsignale für die empfängerseitigen signalangepaßten Filter durch Auslesen von geeignet in digitalen Speichern abgelegten Abtastwerten erfolgt, wobei ein fester hochstabiler Muttertakt die Zeitbasis bildet.

2. Einrichtung zur digitalen Signalsynthese und -verarbeitung für frequenzagile Bandspreizsysteme zur Informationsübertragung über elektrische Energieverteilnetze unter Nutzung der Netzwechselspannung als Synchronisationsreferenz, dadurch gekennzeichnet, daß

a) zum inkohärenten parallelen Optimalempfang von m Signalformen verschiedener Frequenz ein aus dem Stromnetz ausgekoppeltes verstärktes und gefiltertes Empfangssignal X nach Analog/Digitalwandlung an einen digitalen Multiplizierer (6) gelangt, dessen zweiter Eingang ein digitales Referenzsignal Y aus einem von einem Adreßzähler (35) adressierten Abtastwertespeicher 39 erhält, wobei jedem X-Wert 2m Referenzwerte Y - entsprechend den Inphase- und Quadraturabtastwerten der m eingesetzten Signalformen - zugeordnet sind,

b) die im Multiplizierer (6) entstehenden Produkte in einer Ringstruktur aus einem Addierer 7, einem Satz von 2m Registern 8 - 17 und einem Schalter 18 akkumuliert werden, so daß nach Ablauf einer Signalformdauer in den 2m Registern die Inphasekomponenten und die Quadraturkomponenten von m für ein Datenbit oder eine Präambel eingesetzten Signalformen akkumuliert sind,

c) anschließend der Schalter 18, unter Auftrennung der Ringstruktur aus Addierer 7 und Registersatz, die 2m Ergebnisse aus den Registern über einen Quadrierer (19) einer Entscheidungseinrichtung, bestehend aus zwei Schaltern 20, 28, einem Addierer 21 und m+1 weiteren Registern 22 - 27, zuführt, wobei zunächst in 2m Taktschritten des Multipliziertaktes $f_m$ mittels des Addierers 21 in den Registern 22 - 26 der jeweiligen Signalformenergie eines Chips entsprechende digitale Werte berechnet werden,

d) in einem weiteren Taktschritt, in dem sich der Schalter 20 in einer Position III und der Schalter 28 noch in einer Position I befindet, eine Schiebeoperation durchgeführt wird, wobei der Wert aus Register 26 in die beiden Register 22, 27 kopiert wird,

e) in m weiteren Taktschritten, in denen Schalter 28 in einer Position II und Schalter 20 in der Position III ist, in den m Registern 22 - 26 die für eine Chipentscheidung relevanten Differenzen mittels des Addierers 21 unter Verwendung der negierten Ausgänge von Register 26 gebildet werden und zur seriellen Ausgabe an m Ausgangsleitungen 29 - 33 bereitstehen,

f) die m Differenzen mittels eines über eine Leitung 34 eingebbaren Auslesetaktes seriell in voller Länge oder auch teilweise über m Leitungen 29 - 33 z.B. von einen Mikrocontroller gelesen werden können, wobei die Zahlendarstellung so gewählt ist, daß bei Datenempfang kein Auslesetakt nötig ist, und an den m Leitungen 29 - 33 jeweils nur ein Bit zu lesen ist,

g) der Adreßzähler (35) parallel zur Synthese der digitalen Referenzsignale Y zwecks Sendesignalsynthese einen die Sendesignalabtastwerte enthaltenden Abtastwertespeicher 40 adressiert, dessen Ausgangssignale nach Analog/Digitalwandlung, Tiefpaßfilterung und Verstärkung ins Stromnetz eingekoppelt werden, wobei der Pegel an der Eingangsleitung (36) des Adreßzählers (35) die zu sendende Signalformfolge bestimmt, und wobei die Übergänge zwischen den gesendeten Signalformen phasenkontinuierlich gemäß einer CPFH-Modulation ablaufen, dadurch, daß ein solcher Übergang jeweils mit dem Ablauf eines Adreßzählerzyklusses zusammenfällt,

h) der Adreßzähler (35) über eine Leitung 36a veranlaßt werden kann, eine Präambel zu senden, wobei die Dauer eines Präambelchips ein ganzzahliges Vielfaches einer Datenchipdauer ist, und wobei die Frequenzen der Präambelchips mit den Frequenzen der Datenbitchips vollständig, teilweise oder auch nicht übereinstimmend gewählt werden können.

3. Einrichtung nach Anspruch 2, dadurch gekennzeichnet, daß

a) für die Systemsteuerung und den Datentransfer ein Mikroprozessor, ein Mikrocontroller oder eine Digitalschaltung vergleichbarer Funktion eingesetzt ist,

b) diese Digitalschaltung für den Sendevorgang dem Adreßzähler (35) das zu sendende Datenbit zuführt und zuvor die gewünschte Datenrate und die Zahl m der Signalformen verschiedener Frequenz pro Datenbit durch Programmieren des Adreßzählers (35) einstellt,

c) diese Digitalschaltung das Senden einer Präambel durch Programmieren des Adreßzählers (35) veranlaßt und zuvor die gewünschte Dauer und Zahl der Präambelchips sowie deren verschiedene Frequenzen über den Adreßzähler (35) einstellt,

d) diese Digitalschaltung beim Empfangen das Ende einer Signalformdauer dem Steuerwerk (42) über eine Leitung 43 signalisiert, so daß dann, synchronisiert mit dem Abtasttakt fa die Auswertung der im Registersatz 8 - 17 akkumulierten Werte eingeleitet wird.

4. Einrichtung nach Anspruch 2 oder 3, dadurch gekennzeichnet, daß

a) durch Verwendung nur eines Abtastwertespeichers anstelle der beiden Abtastwertespeicher 39, 40 ein Halbduplex-Datenübertragungssystem für CPFH-Modulation entsteht, wobei dieser eine Speicher nunmehr sowohl die Refenzsignalabtastwerte als auch die Sendesignalabtastwerte in verschiedenen Adreßbereichen enthält, und wobei die Unterscheidung der Adressierung beim Senden und Empfangen über separate Adreßleitungen erfolgt, die mit einem als Steuereinheit eingesetzten Mikroprozessor, Mikrocontroller oder einer Digitalschaltung vergleichbarer Funktion verbunden sind,

b) zur Synchronisation der Signalsynthese für Senden und Empfangen und für die Synchronisation der Empfangssignalverarbeitung die Netzwechselspannung als globales Referenzsignal verwendet wird, wobei der Beginn einer Datenübertragung immer an einen Nulldurchgang der Netzspannung gekoppelt ist, und wobei sich am Drehstromnetz ein Basiszeitraster von 1/6 Netzperiode ergibt, das z.B. vorteilhaft zur Festlegung der Präambelchipdauer verwendet werden kann, und aus dem durch ganzzahlige Teilung die Zeitbasen für verschiedene Frequenzsprungraten, wie z.B. $300s^{-1}$, $600s^{-1}$, $1200s^{-1}$, $2400s^{-1}$ oder $4800s^{-1}$ im europäischen 50Hz-Netz gewonnen werden können.

5. Einrichtung nach einem oder mehreren der Ansprüche 2 bis 4, dadurch gekennzeichnet, daß

a) die Funktionsgruppen nach Fig. 2 mit Ausnahme des Analog/Digitalwandlers (1), der Abtastwertespeicher 39, 40 und des Digital/Analogwandlers (41) in einer rein digitalen anwendungsspezifischen integrierten Schaltung ASIC untergebracht sind, oder daß

b) alle Funktionsgruppen nach Fig. 2 in einer gemischt analog/digitalen anwendungsspezifischen integrierten Schaltung, z.B. einer Standardzellen- oder Vollkundenschaltung, untergebracht sind, wobei die Abtastwertespeicher 39, 40 vorzugsweise als RAM-Zellen ausgeführt sind, deren Inhalt nach einem Schaltungsreset über einen äußeren Festwertspeicher, z.B. in Form eines PROMs oder EPROMs geladen wird, oder daß

c) alle Funktionsgruppen nach Fig. 2 zusammen mit einem als Steuereinheit eingesetzten und als Macrozelle verfügbaren Mikroprozessor- oder Mikrocontrollerkern in einer gemischt analog/digitalen anwendungsspezifischen integrierten Schaltung untergebracht sind, wobei für das Programm für diese Steuereinheit entweder ein RAM-Speicher integriert wird, der nach einem Schaltungsreset über einen äußeren Festwertspeicher, z. B. in Form eines PROMs oder EPROMs geladen wird, oder daß ein ROM mit festem Programm integriert wird.

## Claims

1. A method for digital signal synthesis and processing for frequency-hopping band-spreading systems for information transmission via electric power distribution networks by using the mains A.C. voltage as synchronization reference, characterized in that

   a) multi-channel full-duplex data transmission is enabled by means of rapid frequency jumping modulation, with each data bit to be transmitted being transmitted by using an uneven number m of signal shapes of different frequency and with a continuous phase transition being ensured during the frequency change within a data bit and from data bit to data bit;
   b) a preamble for designating the beginning of a data transmission is transmitted with a chip energy which is increased over a data chip in order to ensure on the receiver side a high security of detection and a low probability of false alarms;
   c) the respectively desired number m of the signal shapes of different frequency per data bit and the thus used frequencies as well as the frequency jump rate and data rate and the structure of the preamble are adjustable without any changes to the hardware, e.g. by way of a microprocessor, microcontroller or a digital circuit of comparable function;
   d) on the receiver side there are provided 2m parallel-operating digital signal-adjusted filters for the simultaneous incoherent optimal reception of all m respectively employed signal shapes, with a digital numerical value corresponding to the respective signal shape energy being formed for each of the m signal shapes;
   e) m characteristic differences are determined in digital form by means of the m digital numerical values corresponding to the respective signal shape energy, which differences enable the data bit and preamble chip decision in a simple manner;
   f) an intelligent evaluation of the m characteristic differences is made in that a microprocessor, microcontroller or a digital circuit of comparable function used as a control unit reads the differences serially via m lines and compares per software with a freely selectable threshold, with the said threshold being chosen as a percentage rate of the maximum possible autocorrelation value of a signal shape and with the threshold being able to be set adaptively depending on the received disturbance and/or useful signal energy;
   g) the generation of the send signals as well as the reference signals for the signal-matched filters on the receiver side occurs by reading out suitable sampled-data values stored in digital memories, with a fixed highly-stable master cycle forming the time basis;

2. A device for digital signal synthesis and processing for frequency-hopping band-spreading systems for information transmission via electric power distribution networks by using the mains A.C. voltage as synchronization reference, characterized in that

   a) for the incoherent parallel optimal reception of m signal shapes of different frequencies an amplified and filtered received signal X which is extracted from the mains network reaches a digital multiplier (6) after an analogue-to-digital conversion whose second input receives a digital reference signal Y from a sampled-data value memory 39 addressed by an address counter (35), with each X value being assigned 2m reference values Y, corresponding to the inphase and quadrature sampled data values of the m employed signal shapes;
   b) the products produced in the multiplier (6) are accumulated in a ring structure made up of an adder 7, a set of 2m registers 8-17 and a switch 18, so that after the expiration of a signal shape duration in the 2m registers the inphase components and the quadrature components of m signal shapes used for a data bit or a preamble are accumulated;

c) whereafter the switch 18, by breaking up the ring structure made up of adder 7 and the set of registers, supplies the 2m results from the registers via a squaring element (19) to a decision-making device consisting of two switches 20, 28, an adder 21 and m+1 further registers 22-27, with respective digital values being calculated at first in 2m cycle steps of the multiplier cycle $f_m$ by means of the adder 21 in the registers 22-26 of the respective signal shape energy of a chip;

d) a shift operation is performed in a further cycle step in which the switch 20 is in a position III and the switch 28 is still in a position I, with the value from register 26 being copied to the two registers 22, 27;

e) in m further cycle steps in which switch 28 is in a position II and switch 20 is in the position III the differences relevant for a chip decision are formed in m registers 22-26 by means of the adder 21 by using the negated outputs of registers 26 and are ready for serial output to m output lines (29-33);

f) the m differences can be read serially in full length or even partly via m lines 29-33 by a microcontroller for example by means of a readout cycle which can be entered via a line 34, with the illustration of the numbers being chosen in such a way that no readout cycle is necessary on reception of data and only one bit is to be read in the m lines 29-33;

g) the address counter (35) addresses, parallel to the synthesis of the digital reference signals Y, a sampled-data memory 40 containing send signal sampled-data values for the purpose of a send signal synthesis, with the output signals of said memory 40 being injected into the mains network following analogue-to-digital conversion, low-pass filtering and amplification, with the level at the input line (36) of the address counter (35) determining the sequence of signal shapes to be transmitted and with the transitions between the transmitted signal shapes occurring in a phase-continuous manner according to a CPFH modulation, this being in such a way that such a transition coincides with the functional sequence of an address counter cycle;

h) the address counter (35) can be made via a line 36a to send a preamble, with the duration of a preamble being an integer multiple of a data chip duration and with the frequencies of the preamble chips being chosen to coincide with the frequencies of the data bit chips either completely, partly or even not at all.

3. A device as claimed in claim 2, characterized in that

a) a microprocessor, a microcontroller or a digital circuit of comparable function is used for the system control and the data transfer;

b) said digital circuit supplies the data bit to be transmitted to the address counter (35) for the send process and prior to this sets the desired data rate and the number m of the signal shapes of different frequency per data bit by programming the address counter (35);

c) said digital circuit initiates the transmission of a preamble by programming the address counter (35) and prior to this sets the desired duration and number of the preamble chips as well as their different frequencies by way of the address counter (35);

d) said digital circuit signalizes to the control unit the end of a signal shape duration during the reception via a line 43, so that the evaluation of the values accumulated in the register set 8-17 is initiated in synchronization with the sampling cycle fa.

4. A device as claimed in claim 2 or 3, characterized in that

a) a semi-duplex data transmission system for CPFH modulation is produced by using only one sampled-data value memory instead of the two sampled-data value memories 39, 40, with said one memory containing both the reference signal sampled-data values as well as the send signal sampled-data values in different address areas and with the differentiation of the addressing during transmission and reception being performed via separate address lines which are connected with a microprocessor, microcontroller or a digital circuit of comparable function which are used as a control unit;

b) the mains A.C. voltage is used as a global reference signal for the synchronization of the signal synthesis for transmission and reception and for the synchronization of the received signal processing, with the beginning of a data transmission always being linked to a zero crossing of the mains voltage and with a basic timing code of 1/6 of a mains network period being obtained on the three-phase mains which can be used advantageously for example to determine the preamble chip duration and from which it is possible to obtain by integer division the time bases for different frequency jumping rates such as $300s^{-1}$, $600s^{-1}$, $1200s^{-1}$, $2400s^{-1}$ or $4800s^{-1}$ in the European 50 Hz mains network.

5. A device as claimed in one of the claims 2 to 4, characterized in that

a) the functional groups accoring to fig. 2 are housed in a purely digital application-specific integrated circuit ASIC with the exception of the analogue-to-digital converter (1), the sampled-data value memories 39, 40 and the digital-to-analogue converter (41), or that

b) all functional groups according to fig. 2 are housed in a mixed analogue/digital application-specific integrated circuit, e.g. a standard cell or full custom circuit, with the sampled-data value memories 39, 40 preferably being arranged as RAM cells whose content is loaded following a circuit reset by way of an external read-only memory, e.g. in form of a PROM or EPROM, or that

c) all functional groups according to fig. 2 are housed jointly with a microprocessor or microcontroller core used as a control unit and available as a macro cell in a mixed analogue/digital application-specific integrated circuit, with either a RAM memory being integrated for the program for said control unit which is loaded after a circuit reset by way of an external read-only memory, e.g. in form of a PROM or EPROM, or that a ROM is integrated with a fixed program.

**Revendications**

1. Procédé pour la synthèse et le traitement de signal numériques pour des systèmes d'étalement de spectre à sauts de fréquence en vue de la transmission d'information par des réseaux de distribution d'énergie électrique, avec utilisation de la tension alternative du réseau en tant que référence de synchronisation, caractérisé par le fait que

   a) une transmission de données multicanal duplex bidirectionnelle est possible par modulation rapide par sauts de fréquence, chaque bit de données à émettre étant transmis avec utilisation d'un nombre impair m de formes de signal de fréquences différentes, un changement de phase continu étant assuré lors du changement de fréquence à l'intérieur d'un bit de données et d'un bit de données à un autre,

   b) un préambule émis pour caractériser le début d'une transmission de données est transmis avec une énergie de chip accrue par rapport à un chip de données, pour assurer côté récepteur une grande fiabilité de détection et une faible probabilité de fausse alarme,

   c) le nombre m respectivement désiré des formes de signal de fréquences différentes par bit de données et les fréquences utilisées à cet effet ainsi que les fréquences de sauts de fréquence et les débits de données et la structure du préambule sont réglables sans changement de matériel, par exemple en passant par un microprocesseur, un microcontrôleur ou un circuit numérique de fonction comparable,

   d) côté récepteur, 2 m filtres numériques travaillant en parallèle sont prévus pour la réception optimale incohérente simultanée de toutes les m formes de signal respectivement utilisées, une valeur numérique correspondant à l'énergie respective de la forme de signal étant formée pour chacune des m formes de signal,

   e) à l'aide des m valeurs numériques correspondant à l'énergie respective des formes de signal, m différences caractéristiques sont déterminées sous forme numérique, permettant d'une manière simple la décision sur bit de données et sur bit de préambule,

   f) une évaluation intelligente des m différences caractéristiques a lieu par le fait qu'un microprocesseur, microcontrôleur ou circuit numérique de fonction comparable, utilisé en tant qu'unité de commande, lit les différences de façon sérielle par m lignes et les compare par logiciel avec un seuil pouvant être sélectionné librement, ce seuil étant choisi sous forme de pourcentage de la valeur d'autocorrélation maximale possible d'une forme de signal, le seuil pouvant être réglé de façon adaptative, en fonction de l'énergie de bruit et/ou de l'énergie de signal utile reçue,

   g) aussi bien la production des signaux d'émission que des signaux de référence pour les filtres adaptés, côté récepteur, s'effectue par lecture de valeurs d'échantillonnage déposées de façon appropriée dans des mémoires numériques, une fréquence mère fixe, de haute stabilité, constituant la base de temps.

2. Dispositif pour la synthèse et le traitement de signal numérique pour des systèmes d'étalement de spectre à sauts de fréquence en vue de la transmission d'information par des réseaux de distribution d'énergie électrique, avec utilisation de la tension alternative du réseau en tant que référence de synchronisation, caractérisé par le fait que

   a) pour la réception incohérente parallèle optimale de m formes de signal de fréquence différentes, un signal de réception X prélevé dans le réseau de distribution d'énergie électrique, amplifié et filtré parvient, après conversion analogique/numérique, dans un multiplicateur numérique (6) dont la deuxième entrée reçoit un signal de référence numérique Y à partir d'une mémoire de valeurs d'échantillonnage (39) adressée par un compteur d'adresses (35), 2 m valeurs de référence Y correspondant aux valeurs d'échantillonnage en phase et en quadrature des m formes de signal utilisées étant associées à chaque valeur X,

b) les produits obtenus dans le multiplicateur (6) sont accumulés dans une structure en anneau comprenant un additionneur 7, un jeu de 2 m registres 8-17 et un interrupteur 18, de sorte qu'après écoulement d'une durée de forme de signal, les composantes en phase et les composantes en quadrature de m formes de signal utilisées pour un bit de données ou un préambule sont accumulées dans les 2 m registres,

c) ensuite, l'interrupteur 18, en ouvrant la structure en anneau composée de l'additionneur 7 et du jeu de registres, amène les 2 m résultats des registres, en passant par un élément 19 d'élévation en carré à un dispositif de décision composé de deux interrupteurs 20, 28, d'un additionneur 21 et de m + 1 autres registres 22-27, et en 2 m cycles de la fréquence de multiplication fm, à l'aide de l'additionneur 21, des valeurs numériques correspondant à l'énergie de forme de signal d'un chip sont calculées dans les registres 22-26.

d) dans un autre cycle dans lequel l'interrupteur 20 se trouve dans une position III et l'interrupteur 28 encore dans une position I, on effectue une opération de décalage, la valeur du registre 26 étant copiée dans les deux registres 22, 27,

e) dans d'autres cycles, dans lesquels l'interrupteur 28 se trouve dans une position II et l'interrupteur 20 dans la position III, les différences nécessaires pour une décision sur chip sont formées dans les m registres 22-26, à l'aide de l'additionneur 21, avec utilisation des sorties inverses du registre 26, et sont disponibles pour la sortie sérielle sur m lignes de sortie 29-33,

f) les m différences peuvent être lues au moyen d'un cycle de lecture susceptible d'être introduit par une ligne 34, de façon sérielle en longueur complète ou également en partie en passant par m lignes 29-33, par exemple par un microcontrôleur, la représentation des nombres étant choisie de telle manière qu'aucun cycle de lecture ne soit nécessaire à la réception de données, et qu'un seul bit soit à lire respectivement sur les m lignes 29-33,

g) le compteur d'adresses (35) adresse en parallèle, pour la synthèse des signaux numériques de référence Y, en vue de la synthèse des signaux d'émission, une mémoire de valeurs d'échantillonnage 40 contenant les valeurs d'échantillonnage de signal d'émission, mémoire dont les signaux de sortie, après conversion analogique/numérique, filtrage passe-bas et amplification, sont injectés dans le réseau de distribution d'énergie électrique, le niveau sur la ligne d'entrée (36) du compteur d'adresses (35) déterminant la séquence de forme de signal à émettre, les transitions entre les formes de signal émises s'effectuant en phase continue suivant une modulation CPFH par le fait qu'une telle transition coïncide respectivement avec la fin d'un cycle de compteur d'adresses,

h) le compteur d'adresses (35) peut être amené, en passant par une ligne 36a, à émettre un préambule, la durée d'un chip de préambule étant un multiple entier d'une durée de chip de données, et les fréquences du chip de préambule pouvant être choisies de manière à coïncider complètement ou partiellement ou également à ne pas coïncider avec les fréquences du chip de bits de données.

3. Dispositif suivant la revendication 2, caractérisé par le fait que

a) pour la commande du système et le transfert de données, il est prévu un microprocesseur, un microcontrôleur ou un circuit numérique de fonction comparable,

b) ce circuit numérique amène, pour l'opération d'émission, au compteur d'adresses (35) le bit de données à émettre et règle auparavant le débit de données désiré et le nombre m des formes de signal de fréquences différentes par bit de données, par programmation du compteur d'adresses (35),

c) ce circuit numérique déclenche l'émission d'un préambule par programmation du compteur d'adresses (35) et règle auparavant la durée désirée et le nombre désiré des chips de préambule ainsi que les fréquences différentes de ces derniers en passant part le compteur d'adresses (35),

d) ce circuit numérique, à la réception de la fin d'une durée de forme de signal, signale à la commande (42), en passant par une ligne 43 que l'exploitation des valeurs accumulées dans le jeu de registres 8-17 est déclenchée de façon synchronisée avec la fréquence d'échantillonnage $f_a$.

**4.** Dispositif suivant la revendication 2 ou 3, caractérisé par le fait que

a) par utilisation uniquement d'une seule mémoire de valeurs d'échantillonnage à la place des deux mémoires de valeurs d'achantillonnage 39, 40, il est formé un système de transmission de données semi-duplex pour modulation CPFH, cette unique mémoire contenant maintenant aussi bien les valeurs d'échantillonnage de signal de référence que les valeurs d'échantillonnage de signal d'émission dans différentes zones d'adresses, la différenciation quant à l'adressage lors de l'émission et de la réception s'effectuant par des lignes d'adressage séparées qui sont reliées à un microprocesseur, microcontrôleur ou un circuit numérique de fonction comparable, utilisé en tant qu'unité de commande,

b) pour la synchronisation de la synthèse de signal pour l'émission et la réception et pour la synchronisation du traitement du signal de réception, la tension alternative du réseau est utilisée en tant que signal de référence global, le début d'une transmission de données étant toujours couplé avec un passage par zéro de la tension du réseau, et par le fait qu'il s'établit, sur le réseau électrique triphasé, une trame de base de temps de 1/6 période du réseau qui peut être utilisée par exemple avantageusement pour déterminer la durée du chip de préambule, et à partir de laquelle peuvent être obtenues, par division par nombre entier, les bases de temps pour différentes séquences de sauts de fréquence telles que par exemple 300 $s^{-1}$, 600 $s^{-1}$, 1 200 $s^{-1}$, 2 400 $s^{-1}$ ou 4 800 $s^{-1}$ dans le réseau européen à 50 Hz.

**5.** Dispositif suivant une ou plusieurs des revendications 2 à 4, caractérisé par le fait que

a) les groupes de fonctions selon la figure 2, à l'exception du convertisseur analogique/numérique (1), des mémoires de valeurs d'échantillonnage 39, 40 et du convertisseur numérique/analogique (41) sont disposés dans un circuit intégré pour application spécifique ASIC purement numérique, ou que

b) tous les groupes de fonctions selon la figure 2 sont disposés dans un circuit intégré pour application spécifique analogique/numérique mixte, par exemple un circuit standard ou un circuit personnalisé, les mémoires de valeurs d'échantillonnage 39, 40 étant de préférence réalisées sous forme de RAM dont les contenus sont chargés, après une remise à zéro (reset), en passant par une mémoire morte externe, par exemple sous la forme de PROM ou EPROM, ou que

c) tous les groupes de fonctions selon la figure 2 sont disposés, conjointement avec un noyau de microprocesseur ou microcontrôleur utilisé en tant qu'unité de commande et disponible sous forme de macrocellule, dans un circuit intégré pour application spécifique analogique/numérique mixte, et que pour le programme pour cette unité de commande, soit une mémoire RAM est intégrée, qui est chargée après une mise à zéro (reset), en passant par une mémoire morte externe, par exemple sous la forme de PROM ou EPROM, soit une mémoire ROM à programme fixe est intégrée.

Fig. 1

Fig. 2

| Register↓ / Takt $f_m$→ | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| 22 / 0 | $A_I^2$ | $B_I^2$ | $C_I^2$ | $D_I^2$ | $E_I^2$ | $A_I^2+A_Q^2$ | $B_I^2+B_Q^2$ | $C_I^2+C_Q^2$ | $D_I^2+D_Q^2$ | $E_I^2+E_Q^2$ | $A^2$ | $A^2-B^2$ | $B^2-C^2$ | $C^2-D^2$ | $D^2-E^2$ | $E^2-A^2$ |
| 23 / 0 | 0 | $A_I^2$ | $B_I^2$ | $C_I^2$ | $D_I^2$ | $E_I^2$ | $A_I^2+A_Q^2$ | $B_I^2+B_Q^2$ | $C_I^2+C_Q^2$ | $D_I^2+D_Q^2$ | $E^2$ | $A^2$ | $A^2-B^2$ | $B^2-C^2$ | $C^2-D^2$ | $D^2-E^2$ |
| 24 / 0 | 0 | 0 | $A_I^2$ | $B_I^2$ | $C_I^2$ | $D_I^2$ | $E_I^2$ | $A_I^2+A_Q^2$ | $B_I^2+B_Q^2$ | $C_I^2+C_Q^2$ | $D^2$ | $E^2$ | $A^2$ | $A^2-B^2$ | $B^2-C^2$ | $C^2-D^2$ |
| 25 / 0 | 0 | 0 | 0 | $A_I^2$ | $B_I^2$ | $C_I^2$ | $D_I^2$ | $E_I^2$ | $A_I^2+A_Q^2$ | $B_I^2+B_Q^2$ | $C^2$ | $D^2$ | $E^2$ | $A^2$ | $A^2-B^2$ | $B^2-C^2$ |
| 26 / 0 | 0 | 0 | 0 | 0 | $A_I^2$ | $B_I^2$ | $C_I^2$ | $D_I^2$ | $E_I^2$ | $A_I^2+A_Q^2$ | $B^2$ | $C^2$ | $D^2$ | $E^2$ | $A^2$ | $A^2-B^2$ |
| 27 / 0 | 0 | 0 | 0 | 0 | 0 | $A_I^2$ | $B_I^2$ | $C_I^2$ | $D_I^2$ | $E_I^2$ | $A^2$ | $B^2$ | $C^2$ | $D^2$ | $E^2$ | $A^2$ |
| Schalter 18 | Pos. II | | | | | | | | | | Pos. I | | | | | |
| Schalter 20 | Pos. I | | | | | | | | | | Pos. II | Pos. III | | | | |
| Schalter 28 | Pos. I | | | | | | | | | | Pos. II | | | | | |

Fig. 3

Fig. 4a

RESET

$f_m = 6MHz$

$f_a = 600kHz$

$A_{I0}$ $B_{I0}$ $C_{I0}$ $D_{I0}$ $E_{I0}$ $A_{Q0}$ $B_{Q0}$ $C_{Q0}$ $D_{Q0}$ $E_{Q0}$ $A_{I1}$ ◁———Komponente

| 0 | 1 | 3 | 4 | 5 | 6 | 7 | 8 | 9 | 10 | 11 | Adresse |

ADW_1       ADW_2  Abtastwerte

Einlesen

Wandlung starten

SA_1        SA_2   Sendesignal

EP 0 691 755 B1

TC_END

$f_m$=6MHz

$f_a$=600kHz

Komponente $\longrightarrow$ $A_{I124}$ $B_{I124}$ $C_{I124}$ $D_{I124}$ $E_{I124}$ $A_{Q124}$ $B_{Q124}$ $C_{Q124}$ $D_{Q124}$ $E_{Q124}$ $A_{I0}$ $B_{I0}$

| Adresse | 1238 | 1239 | 1240 | 1241 | 1242 | 1243 | 1244 | 1245 | 1246 | 1247 | 1248 | 1249 | 0 | 1 | 2 | 3 | 4 | 5 | 6 | 7 |
|---|---|---|---|---|---|---|---|---|---|---|---|---|---|---|---|---|---|---|---|---|

Abtastwerte

ADW_250

ADW_1

Einlesen

Wandlung starten

Sendesignal  SA_249  SA_250  SB_1

Fig. 4b

EP 0 691 755 B1